(19) Europäisches Patentamt / European Patent Office / Office européen des brevets

(11) **EP 2 874 383 B1**

(12) **EUROPEAN PATENT SPECIFICATION**

(45) Date of publication and mention
of the grant of the patent:
**25.03.2020  Bulletin 2020/13**

(21) Application number: **13816238.3**

(22) Date of filing: **12.07.2013**

(51) Int Cl.:
**G06F 3/023** *(2006.01)*  **G06F 3/0488** *(2013.01)*
**H04M 1/725** *(2006.01)*

(86) International application number:
**PCT/CN2013/079299**

(87) International publication number:
**WO 2014/008870 (16.01.2014 Gazette 2014/03)**

(54) **SYSTEM AND METHOD FOR CONTROLLING SLIDE OPERATION AUXILIARY INPUT IN PORTABLE TERMINAL DEVICES**

SYSTEM UND VERFAHREN ZUR STEUERUNG VON HILFSEINGABEN DURCH WISCHVORGÄNGE AUF TRAGBAREN ENDGERÄTEN

SYSTÈME ET PROCÉDÉ DE COMMANDE D'UNE ENTRÉE AUXILIAIRE D'UNE OPÉRATION DE GLISSEMENT DANS DES TERMINAUX PORTABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2012  CN 201210244788**

(43) Date of publication of application:
**20.05.2015  Bulletin 2015/21**

(73) Proprietor: **Shanghai Chule (Cootek) Information Technology Co., Ltd.**
**Shanghai 200241 (CN)**

(72) Inventors:
• **ZHANG, Kan**
  **Shanghai 200233 (CN)**
• **WANG, Jialiang**
  **Shanghai 200233 (CN)**
• **WU, Jingshen**
  **Shanghai 200233 (CN)**
• **ZHANG, Meng**
  **Shanghai 200233 (CN)**

(74) Representative: **Grünecker Patent- und Rechtsanwälte**
**PartG mbB**
**Leopoldstraße 4**
**80802 München (DE)**

(56) References cited:
WO-A1-2012/060486    CN-A- 101 833 390
CN-A- 102 096 513    CN-A- 102 739 873
US-A1- 2006 050 962

• YANG LI: "Gesture search", PROCEEDINGS OF THE 23ND ANNUAL ACM SYMPOSIUM ON USER INTERFACE SOFTWARE AND TECHNOLOGY, UIST '10, 3 October 2010 (2010-10-03), page 87, XP055001709, New York, New York, USA DOI: 10.1145/1866029.1866044 ISBN: 978-1-45-030271-5

## Description

### TECHNICAL FIELD

The present invention relates to applications on mobile communication terminals and, in particular, to a technique of information input and information control for portable electronic devices, referring specifically to a system and a method for enabling sliding manipulation-aided information input and control on portable terminal devices.

### BACKGROUND

Conventional mobile communication input and control applications for portable terminals are tedious and complex in terms of operations such as dialing and contact information searching. In most cases, when to make a call to an intended person, a user has to input nearly all numbers of a telephone number of the person, or complete tedious searching tasks, or navigate through several user interfaces, before reaching the telephone number and accomplishing the dialing. This can lead to a low dialing efficiency.

Some solutions have been proposed previously to address this deficiency. For example, fast dialing may be realized by associating numbers on a user-defined dial pad with respective telephone numbers. However, this solution can handle only a limited number of contacts and it is difficult for the user to memorize the associations between numbers on the dial pad and telephone numbers. Another solution is to establish lists of contact favorites for facilitating contact searching. However, this yet could not achieve easy management and search of contact information . In addition, while voice dialing, as still another proposed solution, can achieve dialing without requiring the user to input or tap, it is associated with a number of apparent drawbacks such as time-consuming, relying on networks and unsatisfied voice-recognition quality. Therefore, there exists a practical need for a system and a method that can enable more accurate, faster, easier information input and control with the aid of sliding manipulations.

Document "Gesture Search: A tool for Fast Mobile Data Access" of Yang Li from Google Research (UIST'10, October 3-6. 2010, New York, New York, USA. Copyright 2010 ACM 978-1-4503-0271-5-10-10-10) discloses a system and a method for separating gestures from GUI events on a touchscreen according to their "squareness".

### SUMMARY

It is therefore the object of the present invention to overcome the deficiencies present in prior art solutions as set forth above by presenting a system and method of sliding manipulation-aided input and control on portable terminal devices, which utilize sliding manipulations in lieu of conventional dialing methods to rapidly perform complicated functions on portable terminal devices and simplify user operations and thus result in simplicity, efficiency, reliability, robustness and applicability in a wide spectrum of applications.

To this end, a system and a method of sliding manipulation-aided input on a portable terminal device are provided. According to one aspect, the system for enabling sliding manipulation-aided input in a portable terminal device is disclosed, characterized that the portable terminal device has a touch screen and the system includes a memory configured to store data related to sliding input and a processor coupled to the memory. The processor is configured to display a dial pad or a contact list interface on the touch screen. The processor is further configured to: receive an original message from the dial pad or contact list interface; convert the original message to coordinates and determine, according to a category of the original message, whether the original message represents a sliding manipulation; if the original message is determined as representing a sliding manipulation, analyze the sliding manipulation and compare the sliding manipulation with the data related with sliding input in the database to ascertain a class of the sliding manipulation, or if the original message is determined as not representing a sliding manipulation, trigger a routine action corresponding to the original message; and identify the sliding manipulation according to the ascertained class of the sliding manipulation and the sliding input database, output a result of the identification and trigger a corresponding subsequent action.

According to another aspect, the method for enabling sliding manipulation-aided input in a portable terminal device is disclosed, characterized that the portable terminal device has a touch screen and the method includes displaying a dial pad or a contact list interface on the touch screen and receiving an original message from the dial pad or contact list interface. The method further includes converting the original message to coordinates for processing and determine, according to a category of the original message, whether the original message represents a sliding manipulation. The method further includes, if the original message is determined as representing a sliding manipulation, analyzing the sliding manipulation and comparing the sliding manipulation with the data related with sliding input within the database to ascertain the class of the sliding manipulation, or if the original message is determined as not representing a sliding manipulation, triggering a routine action corresponding to the original message. The method further includes identifying the sliding manipulation according to the ascertained class of the sliding manipulation and the sliding input database, outputting a result of the identification and triggering a corresponding subsequent action.

Using the system and method of the present invention, since it replaces complex operations such as traditional dialing and searching for the contact by simple sliding manipulations based on said contact list application, enables manipulations such as dialing and searching for contacts to be realized rapidly and hence significantly simplify the tedious routine operations needed in the use of common contact list applications and provide users with great convenience. In addition, the system and method of the present invention can further provide a variety of advantages including simplicity, efficiency, reliability, robustness and applicability in a wide spectrum of applications, which enable the system and method to serve as a sound foundation for the further scale-up and market development of the portable terminal device industry.

The invention is defined by the independent claims. Further aspects of the invention are outlined in the dependent claims.

Embodiments which do not fall within the scope of the claims are to be understood as examples useful for the understanding of the invention.

## BRIEF DESCRIPTION OF THE DRAWINGS

FIG. 1 is a schematic block diagram showing the overall configuration of functional modules of a system for enabling sliding manipulation-aided information input control in a portable terminal device in accordance with the present invention.

FIG. 2 depicts an overall flowchart graphically illustrating a method for enabling sliding manipulation-aided information input control in a portable terminal device in accordance with the present invention.

FIG. 3 schematically illustrates the layout of an interface of the system for enabling sliding manipulation-aided information input control in a portable terminal device in accordance with the present invention.

FIG. 4 schematically illustrates how a sliding input is made in an expanded sliding manipulation recognition area in the interface of the system for enabling sliding manipulation-aided information input control in a portable terminal device in accordance with the present invention.

FIG. 5 schematically illustrates how a sliding input is initiated in a special start area in the interface of the system for enabling sliding manipulation-aided information input control in a portable terminal device in accordance with the present invention.

FIG. 6 schematically illustrates an example of results of a contact search in response to a sliding input displayed in the interface of the system for enabling sliding manipulation-aided information input control in a portable terminal device in accordance with the present invention.

FIG. 7 is a diagram schematically illustrating a process flow of a sliding trajectory classifier of the system for enabling sliding manipulation-aided information input control in a portable terminal device in accordance with the present invention.

FIG. 8 is a diagram schematically illustrating a sliding trajectory classification algorithm in the system for enabling sliding manipulation-aided information input control in a portable terminal device in accordance with the present invention.

FIG. 9 is a flowchart graphically illustrating how a sliding manipulation is defined in the method for enabling sliding manipulation-aided information input control in a portable terminal device in accordance with the present invention.

FIG. 10A to 10C are diagrams schematically illustrating a process of performing a user-defined sliding manipulation for enabling dialing in response to a sliding input associated with the sliding manipulation in an embodiment in accordance with the present invention.

FIG. 11 schematically illustrates a sliding manipulation for inputting the Japanese character "え" in the expanded sliding manipulation recognition area in the interface of the system for enabling sliding manipulation-aided information input control in a portable terminal device in accordance with the present invention.

FIG. 12 is a schematic block diagram of the system for enabling sliding manipulation-aided information input control in a portable terminal device in accordance with the present invention.

## DETAILED DESCRIPTION

For a better understanding of the present invention, following embodiments are described to explain.

At the first place, an overview of sliding manipulation recognition is presented.

Simply speaking, the practice of drawing a certain shape on a screen by a person with a finger represents an action to be fulfilled, for example, drawing a circle represents a call to be made to someone. Sliding input, also called sliding manipulation, conforms to users' habits in itself in terms of design, without requiring the users to memorize additional information and thus easily acceptable. In addition, user-defined commonly-used sliding-operations are supported so as to cope with certain events or actions. Further, the present invention may also support the recognition of sliding manipulations composed of multi-strokes sliding inputs on the touch screen, as well as complicated sliding manipulations such as composite manipulations composed of sliding manipulations of different classes.

The contact list application according to the present invention may include a network storage module capable of providing network storage service. With this service, data of predefined sliding inputs and configurations can be stored on and retrieved from an associated network server, thus avoiding the concern of data loss upon SIM card replacement or application removal.

A sliding input database may be established for storing data related with sliding input, including sliding inputs predefined initially, user-defined sliding inputs, and data of Chinese characters and strokes.

(1) sliding inputs predefined initially :providing a user with options for accomplishing routine operations in dialing, such as to directly dial the telephone number of the last call in the call log, or to create a new contact rapidly. By following the using principle of the user, some sliding trajectories are predefined to correspond to those operations and are editable by the users.

(2) User-defined sliding inputs. Users are provided with a list of common-used operations and are allowed to define a complete sliding trajectory information for those operations; or are provided with a number of common-used trajectories and allowed to define operations correspondingly. For example, a telephone number of a certain contact can be directly dialed by one sliding-operation and a user can be allowed to define contacts, telephone numbers or sliding trajectory. Other operations that allow user to definite to sliding trajectories may include sending a Short Message Service (text) message directly to a telephone number of a contact, or sending an email, or viewing the profile of a contact. And other operations combined with those functions especially for the contact list application are also surportable, such as viewing a contact's Social Network Services (SNS) profile directly from the contact list application, editing a signature line, rapidly showing a busy or idle status, or configuration contact groupings and so on.

(3) Data of Chinese Characters and Strokes, when users start a "search-by-stroke" mode, the whole input Chinese character(s) or a set of strokes thereof input by the user may be compared with the database, and then output matched searching results are output.

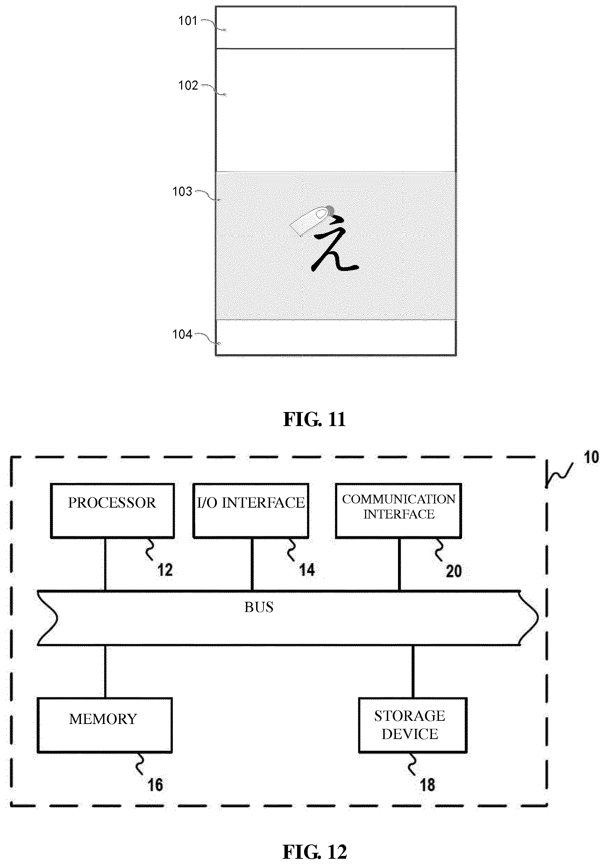

FIG. 12 is a schematic block diagram of a system 10 for enabling sliding manipulation-aided information input control in a portable terminal device in accordance with the present invention. As illustrated, system 10 may include a processor 12, an I/O interface 14, a memory 16, a storage device 18, a communication interface 20 and a data bus for enabling date exchanges among different devices. Processor 12 may be implemented as a central processing unit (CPU), or a graphic processing unit (GPU), or any other suitable information processing device. According to the category of hardware applied, processor 12 may include one or more printed circuit boards and/or one or more microprocessor chips. Processor 12 may execute computer program instructions to perform various processes described below in detail. I/O interface 14 may receive data from a touch screen of the portable terminal device and output data.

Memory 16 may include a random access memory (RAM) and/or a read-only memory (ROM). Processor 12 may cause the computer program instructions to be stored on memory 16, and read therefrom and execute the computer program instructions. For example, memory 16 may store one or more software programs. Further, memory 16 may store a whole or only a part of a software program executable by processor 12.

In some embodiments, storage device 18 is adapted to store data in a large amount, such as the data related with sliding input within the database, including predefined sliding inputs, user-defined sliding inputs, and data of Chinese characters and strokes. Storage device 18 may also store software programs executable by one or more of processors 12. Storage device 18 may include one or more magnetic storage media such as hard drive discs , one or more optical storage media such as compact discs, compact discs-recordable (CD-Rs), compact discs-rewritable (CD±RWs), digital versatile disc (DVDs), digital versatile discs-recordable (DVD±Rs), digital versatile discs-rewritable (DVD-RWs) and Blu-ray DVDs; one or more semiconductor storage media such as flash memories, secure digital (SD) cards and memory sticks, or any other adaptable computer readable storage media.

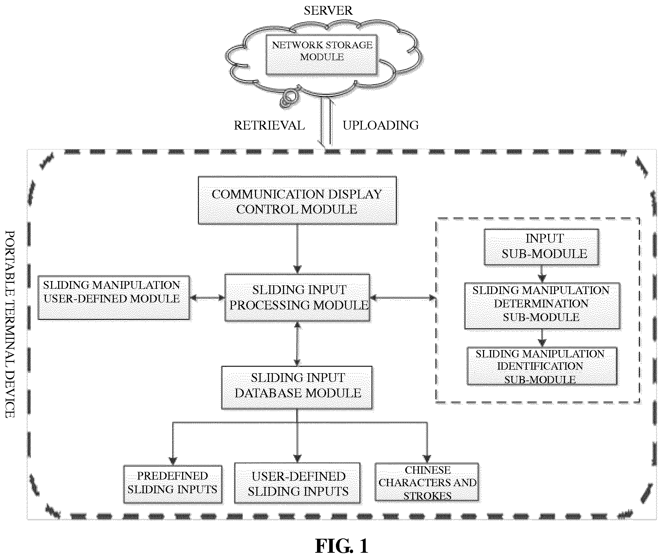

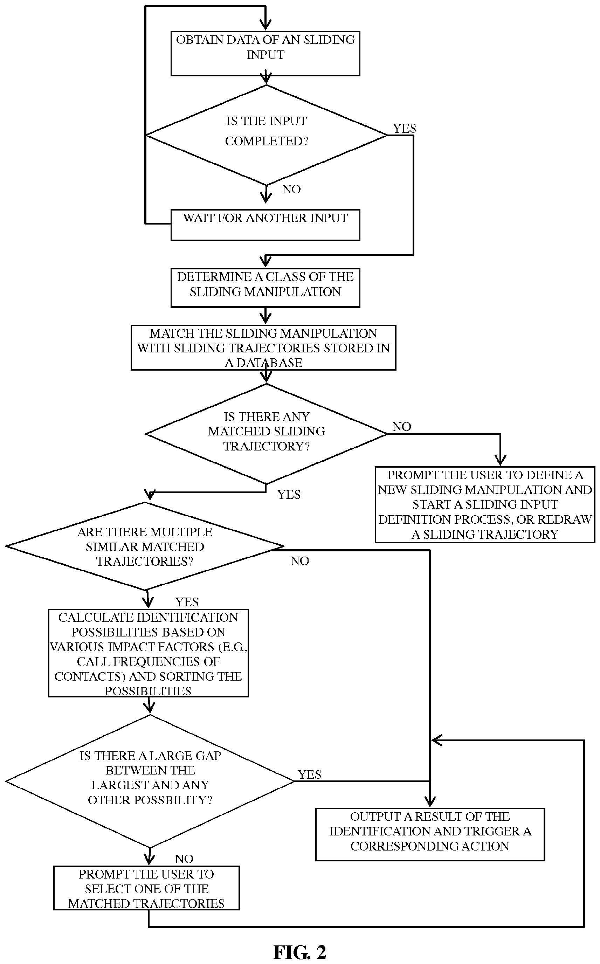

As shown in FIGS. 1 and 2, a system of sliding manipulation-aided input on a portable terminal device, wherein the portable terminal device includes a touch screen, is provided and the system includes:

(1) a communication display control module, for displaying, via the touch screen of the portable terminal device, a communication interface for users to operate; the communication display control module may be implemented as a contact list display control module while the communication interface may be implemented as a contact list interface; the communication display control module may be implemented as a dial pad display control module while the communication interface may be implemented as a dial pad interface;

(2) a sliding input database module, for storing data related with sliding input, wherein the data may include predefined sliding inputs, user-defined sliding inputs, letters, numbers, strokes and handwritten characters.

(3) a sliding input processing module, coupled to the sliding input database module, for receiving the sliding input, via the communication interface, by a user, processing an original message obtained from the touch screen, and determining and identifying a possible corresponding sliding trajectory with the aid of sliding input database module, wherein the sliding input processing module may include the following sub-modules :

(A) an input sub-module, for receiving the user's input and transferring the original message obtained from the touch screen to a sliding manipulation determination sub-module, wherein the original message may be a finger motion of the user, including tapping, lifting, dragging and sliding, and the transfer may include: converting a sliding trajectory, input by the user in a sliding manipulation recognition area of the touch screen, to relative coordinates, and transferring the coordinates to the sliding manipulation determination sub-module, wherein the sliding manipulation recognition area may be a dial pad, or an interface of a corresponding functional component of the contact list application of the portable terminal device, such as a contact list interface or a call log interface, displayed on the touch screen;

(B) a sliding manipulation determination sub-module, for receiving the original message from the input sub-module and processing the original message, wherein the processing may include: operating in one or more of the following sliding input determination modes:

(a) a dial-pad sliding input determination mode, in which the sliding manipulation determination sub-module determines whether a trajectory directly drawn by the user on the dial pad displayed on the touch screen corresponds to a tapping touch or a sliding input;

(b) an independent sliding input determination mode, in which the sliding manipulation determination sub-module determines based on a trajectory drawn by the user in a drawing area; and

(c) a Special-Start-Area sliding input determination mode, in which the sliding manipulation determination sub-module identifies all sliding operations starting within an area designated by the system as sliding inputs and performs a determining process;

wherein the original message may include:

(a) a static motion that corresponds to a location on the touch screen, wherein the static motion may be one of:

(i) a single tap, such as a finger motion wherein the finger lifts immediately right after pressing on the touch screen;

(ii) a short press, such as a finger motion wherein the finger lifts after pressing on the touch screen within a short system-predetermined time of duration; and

(iii) a long press, such as a finger motion of pressing on the touch screen for a long system-predetermined time of duration without lifting or moving; and

(b) a dynamic motion that corresponds to one or more sliding trajectories on the touch screen, wherein the dynamic motion may be one of:

(i) a single slide, such as a finger motion of moving after pressing on the touch screen and then lifting;

(ii) a multiple slide, such as a finger motion of sliding on the touch screen for multiple times in a predetermined time interval; and

(iii) a multi-stroke slide, such as a motion of producing a plurality of trajectories on the touch screen with multiple fingers at the same time, wherein the multiple fingers include two or more fingers; and

(C) a sliding manipulation identification sub-module, respectively connected to the sliding input database module and the sliding manipulation determination sub-module, with the aid of the sliding input database module, determines and identifies possible corresponding sliding inputs, outputting an identification result based on a matched result, and triggering a corresponding subsequent action.

In addition to what has been described above, the sliding input processing module can also be accomplished by other functional sub-modules divided or combined in any other feasible ways, and the corresponding technical solutions and embodiments will not depart from basic ideas of the present invention and therefore are within the protection scope of the invention.

In an embodiment, system 10 may include

(4) a sliding manipulation user-defined module, for configuring user-defined sliding-input actions according to user's manipulations. Specifically, the user may either define a sliding manipulation or a sliding trajectory, or define a contact associated with a sliding manipulation or a subsequent action triggerd by a sliding manipulation.

In another embodiment, system 10 may further include

(5) a network storage module, for establishing an interaction between a network and the portable terminal device based on a contact list and uploading the user's configurations of the sliding manipulation user-defined module and data within the sliding input database module to a server as a backup. The network storage module may be deployed on a cloud.

Referring again to FIG. 2, as for the method of sliding maipulation-aided input on a pa portable terminal device based on the system described above, there are some predetermined conditions as follows:

Displaying a communication interface for users to operate on the touch screen of the portable terminal device.

The method further includes a sliding input determination process and a sliding input identification process. Specifically, the sliding input determination process may include:

the sliding input processing module performs one or more of the following three determination processes in different sliding input modes :

(11) A determination process in a sliding-input in a dial-pad directly mode, in which the sliding input processing module makes a determination with respect to a sliding trajectory directly drawn by the user in the dial pad on the touch screen; the determination process includes the steps of:

(a) the sliding input processing module determines whether user's action is a tap or a sliding input by using the original messages based on one or more of the following rules:

(i) The user's action is determined to be a sliding input when a linear distance between a start point and an end point of the user's sliding action exceeds a predefined distance threshold;

(ii) The user's action is determined to be a sliding input when a length of the trajectory of the user's sliding action exceeds a predefined length threshold;

(iii) The user's action is determined to be a sliding input when a time period for which the finger is kept touching the screen during the user's sliding action exceeds a predefined time threshold;

(iv) The user's action is determined to be a sliding input when the trajectory intersects the borders of two button areas, or bridges two button areas simultaneously, or crossing through at least two button areas, of the dial pad;

(v) The user's action is determined to be a sliding input when two or more points are simultaneously pressed by the user's action, and

(b) determining the user's action as corresponding to a routine manipulation rather than a sliding input, if none of the above criteria is met;

(12) A determination process in an independent sliding input identification mode, in which the sliding input processing module makes a determination with respect to a trajectory drawn by the user in the drawing area; include the following steps of:

(a) the sliding input processing module enters a sliding input identification mode in response to the occurrence of a predetermined user event; and

(b) the sliding input processing module determines any user's action to be a sliding input unless the user's action is determined as corresponding to one of predetermined specific events,
wherein the user event may include one or more of:

(i) tapping a button on the touch screen;

(ii) sending a voice command to the portable terminal device;

(iii) shaking the portable terminal device;

(iv) pressing a physical button of the portable terminal device;

(v) sending a command to the portable terminal device from another input device; and

(vi) drawing a trajectory in a predetermined shape on the touch screen,

and the predetermined specific events, so as to exit the sliding input identification mode, may include: tapping an "exit" button; or sending a voice command or a command from another input device to the portable terminal device for instructing the latter to exit ; or pressing a specific functional button; or performing a specific motion while holding the portable terminal device, such as flipping the portable terminal device;

(13) A determination process in a Special-Start-Area sliding input determination mode, in which the sliding input processing module identifies all trajectories drawn by the user starting within a system-designated area as a sliding input and performs a determination process, includes the steps of:

(a) the sliding input processing module obtains an action of pressing the contact point within the system-designated area by the user;

(b) the sliding input processing module identifies all trajectories starting from the position where the contact point is pressed continuously till a lifting action, to be sliding inputs;.

The sliding input processing module may continue to perform a sliding input identification. The sliding input identification may include the steps of:

(21) analyzing the received sliding input, for example, analyzing received relative coordinates converted from the original message;

(22) determining whether the sliding input is a single slide input or a multi-stroke input;

(23) ascertaining a class of the sliding input by a comparison analysis, wherein the class may be one of:

(a) numbers;

(b) letters;

(c) strokes;

(d) Chinese characters;

(e) handwritten characters of other languages, which may include handwritten Japanese characters, Korean characters, Thai characters, Arabic characters, Hebrew characters and other minor language characters; and

(f) system-predefined or user-defined sliding inputs.

(24) comparing with predefined sliding trajectories within the sliding input database module;

(25) if there is one or more trajectories matched with the sliding input, then proceeding to step (27);

(26) if none of the sliding trajectories is matched, then inquiring a user whether to define a new sliding manipulation, or prompting the user to re-input a sliding trajectory and then coming to an end; and

(27) outputting a result of the identification and triggering a corresponding subsequent action, wherein the subsequent action may include one or more of the steps of:

(a) in case of the result of the identification being a number, appending the number to a dialing sequence of the portable terminal device;

(b) in case of the result of the identification being a letter, appending the letter to a search sequence of the portable terminal device and returning all contact entries containing the letter;

(c) in case of the result of the identification being a stroke, appending the stroke to a search sequence of the portable terminal device and returning all contact entries containing the stroke; and

(d) in case of the result of the identification being a Chinese character or a handwritten character of another language, appending the Chinese character or handwritten character to a search sequence of the portable terminal device and returning all contact entries containing the Chinese character or handwritten character.

In other embodiments, the sliding input identification may further include, prior to step (27), one or more of the steps of:

(27a) the sliding input processing module calculating possibility weights of the matched sliding trajectories based on system-predefined impact factors and sorting the sliding trajectories by the possibility weights, wherein the system-predefined impact factors may include call frequency, and the calculation may include:
obtaining the possibility weights by weighting similarities of the matched sliding trajectories by the respective system-predefined impact factors;

(27b) displaying all the sorted sliding trajectories as the result of the identification to the user for selection, or a default result of the identification to the user, wherein the default result may be directly set as one of the sorted sliding trajectories corresponding to the largest one of the possibility weights if the differences between the largest and the other ones of the possibility weights all exceed a system-predefined threshold, or otherwise all the sorted sliding trajectories for the user's selection.

In other embodiments, the method of the present invention may further include user definition of a sliding input. The user definition may include the steps of:

(31) the sliding manipulation user-defined module accomplishing the definition of a sliding input according to the user's manipulations,
wherein the definition may include the steps of:

(a) prompting the user to draw a desired sliding trajectory on the touch screen;

(b) comparing the drawn sliding trajectory with an existing sliding trajectory;

(c) if a similarity between the two trajectories exceeds a system-predefined threshold, causing the pre-stored similar sliding trajectory to be displayed and prompting the user to redraw a sliding trajectory; and

(d) otherwise storing data about the drawn sliding trajectory, the data at least including the drawn sliding trajectory itself,

or alternatively the steps of:

(a) reading out system-predefined sliding input candidates;

(b) displaying the sliding input candidates and prompting the user to select one therefrom; and

(c) storing the selected candidate as a defined sliding input;

(32) the sliding manipulation user-defined module accomplishing, according to the user's manipulations, the definition of a corresponding subsequent action triggered by a sliding input, wherein the subsequent action may include:

(a) a contact-related action, including:

(i) dialing a designated contact;

(ii) sending a text message to a designated contact;

(iii) sending an email to a designated contact;

(iv) sending an instant message to a designated contact via network;

(v) visiting a SNS homepage of a designated contact,

(b) a routine action of the portable terminal device.

Alternatively, the user definition of the sliding input may include the steps of:

(31) the sliding manipulation user-defined module accomplishing, according to the user's manipulations, the definition of a subsequent action triggered by a corresponding sliding input, wherein the subsequent action may include:

(a) a contact-related action, including:

(i) dialing a designated contact;

(ii) sending a text message to a designated contact;

(iii) sending an email to a designated contact;

(iv) sending an instant message to a designated contact via network; and

(v) visiting a SNS homepage of a designated contact, and

(b) a routine action of the portable terminal device.

(32) the sliding manipulation user-defined module accomplishing, according to the user's manipulations, the definition of the corresponding sliding input that can trigger the defined subsequent action, wherein the definition may include the steps of:

(a) prompting the user to draw a desired sliding trajectory for triggering the defined subsequent action on the touch screen;

(b) comparing the drawn sliding trajectory with an existing sliding trajectory;

(c) if a similarity between the two trajectories exceeds a system-predefined threshold, causing the pre-stored similar sliding trajectory to be displayed and prompting the user to redraw the sliding trajectory; and

(d) otherwise storing data about the drawn sliding trajectory and establishing a correlation between the defined sliding input and the defined subsequent action,

or alternatively the steps of:

(a) reading out system-predefined sliding input candidates;

(b) causing the sliding input candidates to be displayed and prompting the user to select one therefrom; and

(c) storing the selected candidate as a defined sliding input and establishing a correlation between the defined sliding input and the defined subsequent action.

In specific embodiments, default subsequent actions that can be triggered by corresponding sliding manipulations may be defined in the sliding manipulation user-defined module. For example, in the process of the user defining a sliding input, a corresponding default subsequent action may be defined as dialing, i.e., dialing a contact designated by the user. In addition, the user may also be allowed to define a corresponding sliding input for a given subsequent action such as dialing a user-designated contact. Further, the user may also be provided with a number of subsequent actions triggered by sliding inputs, from which the user can select a desired one and define a corresponding slide input for it.

In practice, as shown in FIG. 1, the system of the present invention may include:

1. a communication display control module, for displaying a communication interface for a user to operate on the touch screen of the portable terminal device, wherein the module may be implemented as a contact list display control module, while the communication interface may be implemented as a contact list interface; the communication display control module may be implemented as a dial pad display control module, while the communication interface may be implemented as a dial pad interface;

2. a sliding manipulation user-defined module, allowing the user to define favorable sliding trajectories for various sliding manipulations;

3. a sliding input processing module, which may including the following sub-modules in one embodiment:

(1) an input sub-module, which accesses to a response to sliding manipulations in the contact list application, transferring an original message from a manipulation of the user in a sliding manipulation recognition area on the touch screen to a sliding manipulation determination sub-module described in detail below, by means of converting the original message to relative coordinates, and transferring the coordinates to the sliding manipulation determination sub-module, wherein

(a) the original message is a finger motion of the user with respect to the touch screen, including, for example, tapping, lifting, dragging and moving, and

(b) the sliding manipulation recognition area may be a dial pad or an interface of the contact list application for triggering an action, such as for example, a contact list interface for enabling a search of a contact in response to a handwritten input of stroke(s);

(2) the sliding manipulation determination sub-module, for processing and analyzing an original message, after receiving the original message from the input sub-module, capable of processing complex inputs such as multi-stroke input. It determines whether an original message is a tapping touch or a sliding input based on properties of the original message and relevant system configurations, and transfers an original message to a sliding manipulation identification sub-module for further identification when the original message is determined as a sliding input; and

(3) the sliding manipulation identification sub-module, essentially for cooperating with a sliding input database module to identify possible corresponding sliding trajectories, wherein the sliding input database module may feed a list of all sliding trajectories similar to the sliding input back, with the most similar one topping the list, thereby enabling the outputting of a most possible trajectory.

It is noted that in addition to what has been described above, the functions of the sliding input processing module can also be accomplished by other functional sub-modules according to any technically possible division or combination of those described above with corresponding aspects and embodiments without departing from the spirit and scope of the present invention. Description of these aspects and embodiments are omitted herein in the sake of simplicity.

The system of the present invention may further include:

4. the sliding input database module, for storing data related with sliding input, wherein the data may include predefined sliding inputs, user-defined sliding inputs, letters, numbers, stroke, handwritten characters and so on;

5. a network storage module, for establishing an interaction between a network and the portable terminal device based on a contact list and uploading the user's configurations of the sliding manipulation determination sub-module and data within the sliding input database module to a server as a backup, so that these data can be retrieved via the network and recovered even when the user has changed for a new cellular phone or uninstalled the application and thus avoid the effort of re-creating such data, wherein the network storage module is optional.

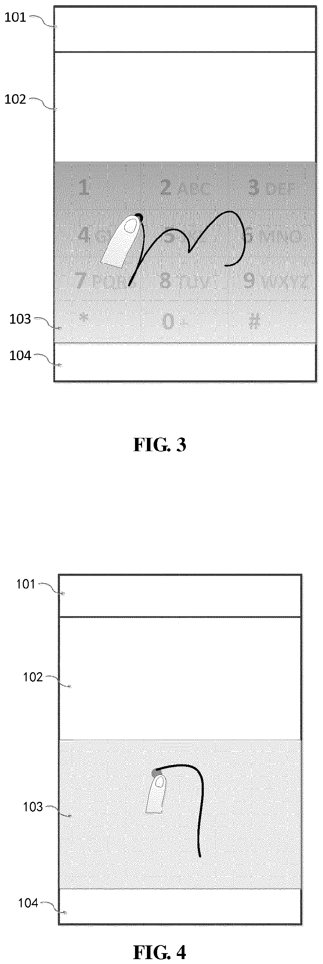

FIG. 3 shows the layout of an interface of the contact list application using the system of the present invention. As illustrated, the interface may include:

- a top area 101, for displaying properties of the current page;

- a main area 102, including sections such as a contact list section and a dialing section;

- a dial pad 103, which is a sliding input area; and

- a bottom area 104 for displaying sliding input-related information.

Functions that can be performed by the foregoing modules will be described in detail below.

I. User Definition of Sliding manipulations

This function allows the user to register a corresponding sliding manipulation for a given action. The user can initiate a sliding manipulation definition process by activating the sliding manipulation user-defined module (for example, by means of tapping an "add a new sliding manipulation" option in a menu). An example for sliding manipulation definition process includes the steps of:

1. sliding trajectory definition, including: prompting the user to draw a desired sliding trajectory, wherein depending on system or user configurations, capable of processing the trajectory including single slide, or multiple slide or multiple slide; comparing the drawn trajectory with predefined trajectories; if there is any predefined trajectory with a high similarity with the drawn trajectory, displaying the predefined trajectory(ies) to the user and prompting the user to redraw a trajectory; and otherwise storing the drawn trajectory as a newly-defined trajectory and stepping in step 2 to define a subsequent action triggered by the drawn trajectory;

2. subsequent action definition, including defining a subsequent action triggered by the newly-defined trajectory, wherein the subsequent action may be one of actions including, but not limited to:

(a) contact-related actions, including:

(i) dialing a designated contact;

(ii) sending a text message to a designated contact;

(iii) sending an email to a designated contact;

(iv) sending an instant message to a designated contact via network; and

(v) visiting a SNS homepage of a designated contact, and

(b) routine actions of the portable terminal device, for instance, emptying the call log.

In addition to user-defined manipulations, there are some system-predefined sliding trajectories and subsequent actions stored in the system. As such, in step 1, besides drawing a sliding trajectory, the user may also be allowed to make a selection among predefined sliding trajectories.

In some embodiments, the foregoing steps may also be performed in a reverse order. For example, the user may be guided to firstly define a subsequent action, and then define a corresponding sliding trajectory for triggering the subsequent action. In other embodiments, a default subsequent action, for example, sending a text message to a designated contact, may be provided so that upon the activation of the definition mode, definition of a corresponding sliding trajectory for the default subsequent action is automatically initiated.

II. Sliding manipulation Determination

The original message transferred from the input sub-module may correspond to one of motions including, but not limited to:

(a) static motions each corresponding to a point on the touch screen, including:

(i) taps, each consisting of pressing down and then immediately lifting;

(ii) short presses, each consisting of pressing down and then lifting after a short time; and

(iii) long presses, each consisting of pressing down without lifting or moving for a certain time period thereafter, and

(b) dynamic motions, each corresponding to one or more sliding trajectories on the touch screen, including

(i) single slide, each consisting of moving the contact point after pressing down and then lifting;

(ii) multiple slide, each consisting of more than one single sliding occurring in a predetermined time interval; and

(iii) two (or multiple)-touch slides, each creating two (or multiple) trajectories at the same time.

Upon the sliding manipulation determination sub-module receiving the original message transferred from the input sub-module, it may initial a process of determining a sliding manipulation, wherein there are three sliding manipulation determination modes:

• a dial-pad direct input mode, which allows the user to draw a trajectory directly in the dial pad;

• an independent sliding input identification mode, which allows the user to draw a trajectory drawn in a drawing area; and

• a Special-Start-Area identification mode, in which any trajectory drawn by the user with the starting point within an system-designated area is determined as a sliding trajectory;

1. Dial-Pad Direct Input Mode

In this mode, the user may tap or perform a sliding manipulation on numbers on the dial pad, to input the number. The sliding manipulation determination sub-module can determine whether the input action belongs a sliding input or a tap based on the original message. The sliding manipulation determination sub-module can determine the original message corresponds to a sliding manipulation but not a tap, when one or more of the following criteria are met:

• The input action is determined to be a sliding input when a linear distance between a start point and an end point of an associated trajectory exceeds a predefined distance threshold;

• The input action is determined to be a sliding input when a length of the trajectory of the user's sliding action exceeds a predefined length threshold

• The input action is determined to be a sliding input when a time period for keeping the finger touching the screen during drawing the trajectory exceeds a predefined length threshold;

• The input action is determined to be a sliding input when the trajectory intersects the borders of two buttons or bridges two buttons simutaneously;

• The input action is determined to be a sliding input when two or more points are simultaneously pressed .

Any one or more of these criteria can be arbitrarily combined to form various determination logics. Any violation of these logics will cause a corresponding finger motion of the user to be determined as a routine manipulation, such as tapping a dial button, rather than a sliding manipulation.

As shown in FIG. 4, when a trajectory drawn on dial pad 103 intended to represent the Arabic number "7" meets associated prescribed criteria, an action corresponding to the trajectory will be triggered.

2. Independent Sliding Input Identification Mode

This mode may be activated upon the occurrence of one or more of the user events described below. In other words, in this mode, except several predetermined specific events, all other user manipulations are determined as sliding manipulations. Further, the mode will be exited upon a detection of any of the predetermined specific eventss.
The user events may include but not limited to:

- Tapping a virtual button on the touch screen;

- Sending a voice command to the portable terminal device;

- Shaking the portable terminal device;

- Pressing a physical button of the portable terminal device;

- Sending a command to the portable terminal device from another input device;

- Drawing a trajectory in a predetermined shape on the touch screen.

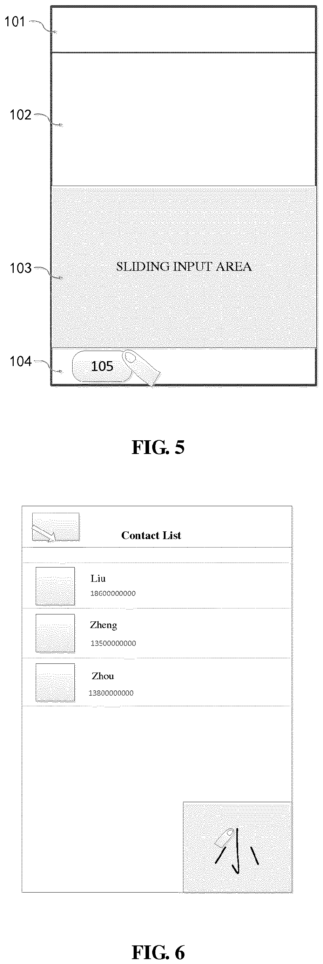

In addition, the predetermined specific events may include: tapping an "exit" button; or sending a voice command or a command from another input device to the portable terminal device for instructing the latter to exit the mode; or tapping a predetermined function button; or performing a specific motion while holding the portable terminal device, such as flipping the portable terminal device.
As shown in FIG. 5, when a sliding input function button 105 in bottom area 104 of a specific interface is tapped, the independent mode is activated and the sliding manipulation recognition area is expanded for a user to make a sliding input.

3. Special-Start-Area Identification Mode

In some interfaces of the portable terminal device, all the user's sliding manipulations starting from a "touch point" pressed in a specific area are determined as sliding inputs.
As shown in FIG. 6, in a contact list interface, any manipulation with its starting point within the square area displayed on a right bottom portion of the screen will be determined as a sliding manipulation. For instance, when a Chinese character "小" is input by a sliding input, the contacts containing this Chinese character "小" will be displayed.
These three modes can be activated at the same time. As such, for example, the user can choose to make an input either by directly sliding on the dial pad or by starting the sliding input from the special start area.
If a user manipulation is determined as a sliding manipulation, it will be further subject to an sliding input identification process. Otherwise, it will trigger a common-used action. For example, tapping a number button on the dial pad will trigger the input of a corresponding number.

III. Sliding manipulation Identification

The identification may include the steps of:

(1) receiving and analyzing data representative of the determined sliding manipulation from the sliding manipulation determination sub-module;

(2) determining whether the sliding manipulation is a single slide input or a multiple slide input;

(3) ascertaining a class of a trajectory of the sliding manipulation, wherein the class may be one of classes including but not limited to:

(a) numbers, such as "1", "2" or "3";

(b) letters, such as "a", "b" or "c";

(c) Chinese character strokes, such as horizontal strokes with or without a vertical turn or down strokes to the left or right;

(d) Chinese characters, such as "王" or "张";

(e) handwritten characters of other languages, such as handwritten Japanese characters, Korean characters or Thai characters;

(f) system-predefined or user-defined trajectories, such as

$$\text{“} C \text{”, “} V \text{”,}$$

or

$$\text{“} P \text{”.}$$

(4) comparing the trajectory of the sliding manipulation with predefined trajectories of the ascertained class, and proceeding to the next step if one or more predefined trajectories matched with the trajectory of the sliding manipulation, or otherwise inquiring the use whether to define a new sliding manipulation or prompting the user to redraw a trajectory; and

(5) calculating the possibilities of the matched trajectories based on various impact factors (such as call frequency) and sorting the matched trajectories by the possibilities.

The possibilities of the matched trajectories are determined not only by their similarities to the trajectory of the sliding manipulation but also by the nature or objects of their corresponding subsequent actions. For example, it is more possible to dial a frequently contacted contact than an infrequently contacted contact, and it is more possible to dial a given contact in a contact list than to visiting his SNS homepage. In some embodiments, the possibilities of the matched trajectories are optionally determined by weighting their similarities by many impact factors. In other embodiments, the possibilities of the matched trajectories are merely determined by their similarities to the trajectory of the sliding manipulation.

The identification may further include the step of:
(6) determining the trajectory with the largest possibilities as a result of the identification in case of a large gap between this largest possibility and any other one of the possibilities, or otherwise displaying all the matched trajectories as the result of the identification for the user to select one therefrom.

Optionally, in the event of the sliding manipulation corresponding to multiple possible trajectories, the user may be prompted to select one therefrom. Alternatively, in some embodiments, the matched trajectory with the largest possibility is always selected and displayed as the result of the identification.

The identification may further include the step of:
(7) outputting the result of the identification and triggering a corresponding subsequent action.

When the result of the identification is a user-defined or predefined trajectory, the correspondingly defined subsequent action may be triggered. When the identification is a trajectory representing a number, the number may be appended to a dialing sequence. When the identification is a trajectory representing a letter, the letter may be appended to a search sequence and all contact entries containing the letter may be thus returned. When the identification is a trajectory representing a stroke, the stroke may be appended to a search sequence and all contact entries containing the stroke may be thus returned. When the identification is a trajectory representing a Chinese character or a handwritten character of another language, the Chinese character or the handwritten character of the other language may be appended to a search sequence and all contact entries containing the Chinese character or the handwritten character of the other language may be thus returned.

It should be noted herein that the above descried steps (5) and (6) are optional.

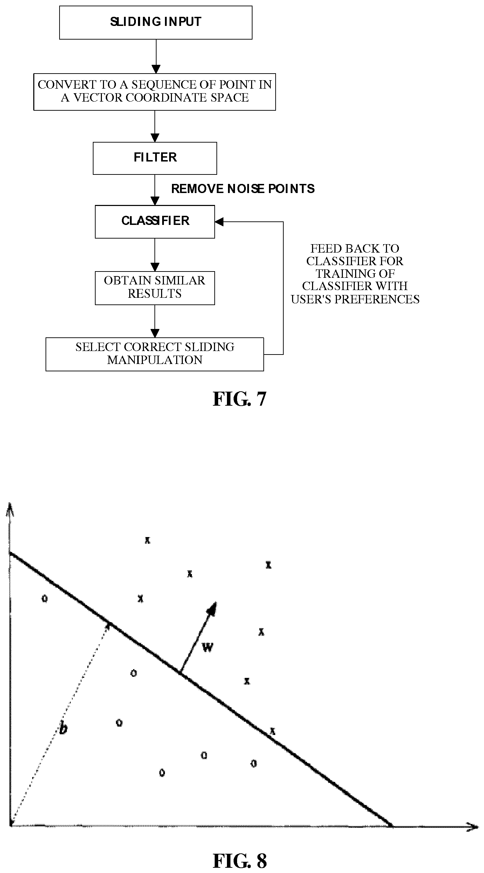

Further, the sliding manipulation identification process of the present invention may be accomplished using the algorithm in which a SVM classifier is adapted to recognize different trajectories and categorizing then as, for example, letters, numbers, strokes or others. The algorithm achieves classification of unclassified trajectories using a training process on a basis of classified training examples as well as collected user preferences of sliding manipulations and relevant configurations. Referring to FIG. 7, the ascertainment by the classifier may include:

(1) the input sub-module receiving a signal generated from the user' sliding input and converting the signal to a sequence of points in a vector coordinate space;

(2) removing noise points in the sequence and outputting a noise free path by a filter, converting the noise free path into coordinates, and transferring the coordinates to the classifier;

(3) the classifier performing a recognition analysis and resulting in a set of recognized sliding inputs; and

(4) providing the recognized sliding trajectories to the user for the selection of a correct one therefrom and feeding the user's selection to the classifier for its further training.

SVMs are classification boundary-based algorithms, which basic principles will be explained below in context of the classification of two-dimensional data. Given a set of training data which are points belonging to different categories and distributed in different areas in accordance with their categories in a two-dimensional plane, the aim of the algorithms is to figure out a boundary or a set of boundaries, either linear (i.e., linear classification boundary or boundaries) or non-linear (i.e., non-linear classification boundary or boundaries), between these points of the different categories through a training process. In addition, the algorithms can also handle multi-dimensional data (for example, N-dimensional) which can be represented by points in an N-dimensional space. In this case, the aforesaid boundaries are accordingly an (N-1)-dimensional plane or (N-1)-dimensional planes in the N-dimensional space, also called a hyperplane or hyperplanes. Classifiers based on linear hyperplanes are called linear classifiers, and their non-linear counterparts are called non-linear classifiers.

As shown in FIG. 8, data points in a space can be categorized into difference areas by a straight line (i.e., two-dimensional) or a hyperplane. In a linear SVM algorithm, the hyperplane can be expressed as *(w·x)+b=0*, which requires:

$$\min_{\alpha} \quad \frac{1}{2}\sum_{i=1}^{l}\sum_{j=1}^{l} y_i y_j \alpha_i \alpha_j (x_i \cdot x_j) - \sum_{j=1}^{l} \alpha_j,$$

$$s.t. \quad \sum_{i=1}^{l} y_i \alpha_i = 0$$

$$\alpha_i \geq 0$$

Optimal solution to this problem is (the detailed of the calculation will be described otherwise):

$$w^* = \sum_{i=1}^{l} y_i a_i^* x_i \quad , \quad b^* = y_j - \sum_{i=1}^{l} y_i \alpha_i (x_i \cdot x_j)$$

The linear SVM algorithm is based on a largest gap method involving a quadratic programming problem. The solution is obtained by incorporating optimization problems and constraints using the Lagrange function and then applying the duality theory.

Described below are several preferred examples of sliding manipulation definition according to the present invention.

1. Predefined sliding inputs. This can provide the user with a set of actions in the contact list application that are most performed according to statistical data, and a set of corresponding sliding trajectories, and allow the user to make modifications.

Examples of such actions may include deleting all input contents, directly dialing the latest contact phone number, and deleting all call records.

| Action | Conventional Manipulations | Fast Sliding manipulation |
|---|---|---|
| 1. Deletion of all input contents | Repeatedly tapping the "Delete" button | |
| 2. Voice dialing | Long pressing the number button "1" | |
| 3. Directly dialing of the latest contact phone number | Entering the call log interface → tapping the latest contact phone number | |
| 4. Deletion of all call records | Tapping the "Menu" button→ Selecting the option "Delete all call records" →confirming a popup dialog | → Confirming the popup dialog |
| 5. Creating a new contact | Entering the telephone number of the contact in the dialing interface → tapping the "Add" button→ navigating to the contact editing interface, or entering the contact list interface→ tapping the "Add" button→ navigating to the contact editing interface | → Directly entering the contact editing interface |

In this table, circles in the trajectories of the sliding manipulations represents starting points of the trajectories.

A more detailed description of the fast sliding manipulations is given below.

(1) Fast Deletion of All Call Records

The user can accomplish this action by following the steps of: drawing the predefined trajectory corresponding to the action on the dial pad; and confirming the popup dialog "Do you want to delete all call records?"

The manipulation for this action can be modified by the user, following the steps of: entering a sliding manipulation configuration interface; selecting the option "Delete all call records"; navigating to a sliding trajectory editing interface; drawing a trajectory associated with the action, such as "×"; and saving the input trajectory. Users are allowed to define or edit the sliding manipulation and a sliding trajectory by a multiple-stroke input is also supportable..

(2) Directly Dialing of the Latest Contact Phone Number

[0073]   The user can accomplish this action by drawing on the dial pad the predefined trajectory "L" that corresponds to this action. With respect to nowadays smartphones with large screen, many users have difficulty in exactly tapping a topmost position of the first line of the list, and a sliding distance of the finger could be very large. This fast sliding manipulation can address this inconvenience.

The manipulation for this action can be modified by the user following the steps of: entering the sliding manipulation configuration interface; selecting the option "Directly dial the latest contact phone number"; navigating to a sliding trajectory editing interface; drawing a trajectory associated with the action, such as "1"; and saving it. Users are allowed to define or edit the sliding manipulation and a sliding trajectory by a multiple-stroke input is also supportable..

(3) Fast Creating a New Contact

The user can accomplish this action by drawing on the dial pad the predefined trajectory "+" that corresponds to this action to call a system program for new contact creation.

The manipulation for this action can be modified by the user following the steps of: entering the sliding manipulation configuration interface; selecting the option "Fast create a new contact"; navigating to a sliding trajectory editing interface; drawing a trajectory associated with the action, such as "N"; and saving it. Users are allowed to define or edit the sliding manipulation and a sliding trajectory by a multiple-stroke input is also supportable.

Further, the sliding manipulation predefinition may also be applicable to the contact list interface or the call log interface. For example, in the contact list interface or the call log interface, after selecting a designated contact, the user may make a sliding movement from left to right on the location of the item of a designated contact to cause the dialing of the contact, or make a sliding movement from right to left on the location of the item of a designated contact to cause the initiation of sending a text message to the contact.

The modification of such manipulations may include the steps of: entering the sliding manipulation configuration interface; selecting the option "Dial a contact"; navigating to a sliding trajectory editing interface; inputting a motion associated with the action, such as a slide over the location of the item of a designated contact from left to right; and saving it. Or similarly the steps of: entering the sliding manipulation configuration interface; selecting the option "Send a text message"; navigating to a sliding trajectory editing interface; inputting a motion associated with the action, such as a slide over the location of the item of a designated contact from right to left; and saving it.

2. User-defined sliding inputs. This can provide the user with a relatively large number of dialing actions for the user to associating corresponding manipulations with them, for example, directly dialing a certain contact, directly sending a text message to a telephone number, directly visiting a SNS homepage of a contact, and checking contact(s) within a contact grouping.

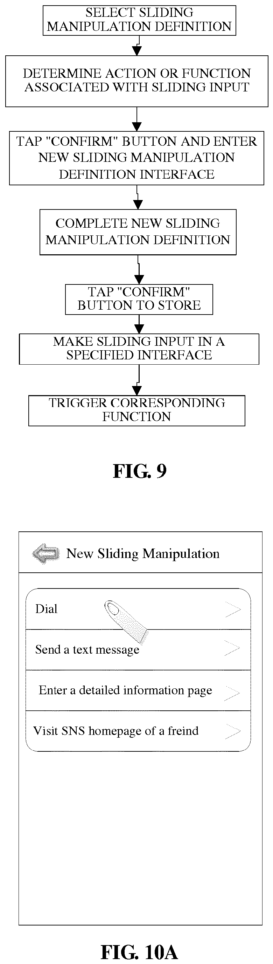

As shown in FIG. 9, the user definition may include the steps of:

- selecting the option for user-definition of a sliding manipulation;

- determining a subsequent action or function associated with an intended sliding manipulation and then navigating an interface for defining a new sliding manipulation;

- completing the configuration of the new sliding manipulation and storing the configurations;

- drawing a corresponding sliding trajectory on the dial pad or contact list interface; and

- triggering the associated action or function.

A more detailed description of the user definition is given below.

(1) Directly Dialing a Telephone Number of a Contact

A conventional user manipulation for accomplishing this function may include the steps of: initiating a contact search; obtaining a contact list; selecting the intended contact; selecting the telephone number of the contact; and dialing the telephone number.

In contrast, a sliding manipulation according to the invention for accomplishing this function may include the steps of:

(a) entering the new sliding manipulation definition interface, selecting the dialing of a telephone number as a subsequent action, and defining a sliding trajectory corresponding to the subsequent action, as shown in FIG. 10A;

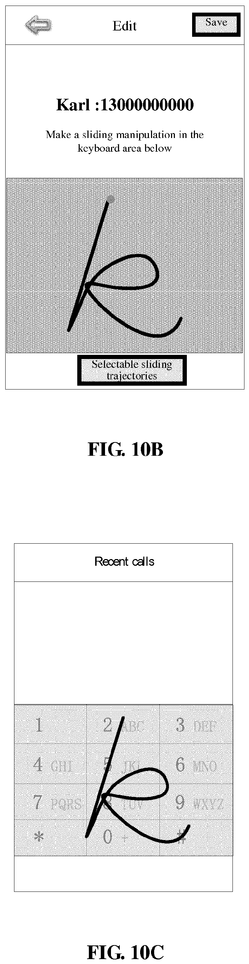

(b) selecting a telephone number or a contact to be associated and inputting the sliding trajectory corresponding to the subsequent action, for example, associating the sliding trajectory "$\mathcal{k}$" with the telephone number 13000000000, saving the configuration and thereby completing the sliding manipulation definition for the action of dialing the telephone number 13000000000, as shown in FIG. 10B;

(c) inputting the defined sliding trajectory, i.e., "$\mathcal{k}$" in the contact list interface or the dialing interface, as shown in FIG. 10C;

(d) the sliding manipulation identification sub-module performing classification and determination on the input sliding trajectory and transferring a precisely matched result to an output module, i.e., adding the telephone number 13000000000 associated with the trajectory "$\mathcal{k}$" to a dialing sequence; and

(e) initiating a dialing program of the system. Once a sliding manipulation has been defined, it can be used to directly trigger an associated subsequent action, such as for example, dialing a telephone number, sending a text message, sending an email, sending an instant message, or visiting an SNS homepage, of a designated contact, by means of a corresponding graphic sliding trajectory.

(2) Directly Sending a text Message to a Telephone Number of a Contact

A conventional user manipulation for accomplishing this function may include the steps of: initiating a contact search; obtaining a contact list; selecting the intended contact; entering an interface showing the details of the contact; selecting the telephone number of the contact; and editing the text message.

In contrast, a sliding manipulation according to the invention for accomplishing this function may include the steps of:

(a) entering the new sliding manipulation definition interface and selecting the sending of a text message as a subsequent action;

(b) selecting a telephone number or a contact to be associated and define a sliding trajectory corresponding to the subsequent action, for example, associating the sliding trajectory "𝑘" with the telephone number 13000000000, saving the configuation and thereby completing the sliding manipulation definition for the action of sending a text message to the telephone number 13000000000;

(c) inputting the defined sliding trajectory, i.e., "𝑘" in the contact list interface or the dialing interface;

(d) the sliding manipulation identification sub-module performing classification and determination on the input sliding trajectory and transferring a precisely matched result to the output module, i.e., adding the telephone number 13000000000 associated with the trajectory "𝑘" to a text message destination; and

(e) initiating a text message module directly and thus entering an interface for editing the text message for the telephone number 13000000000.

(3) Directly Visiting an SNS Homepage of a Contact

A sliding manipulation according to the invention for accomplishing this function may include the steps of:

(a) entering the new sliding manipulation definition interface, selecting a contact in the contact list bonded with its SNS account, and defining a sliding trajectory associated with the action of visiting the SNS homepage of the designated contact, for example, the sliding trajectory "W" representing the action of directly entering a twitter interface of a contact with the name Zhang San;

(b) inputting the defined sliding trajectory, for example, "W", in the contact list interface or the dialing interface;

(c) the sliding manipulation identification sub-module performing classification and determination on the input sliding trajectory and transferring a precisely matched result to the output module;

(d) determining whether the user has an installed corresponding SNS application and visiting the SNS homepage associated with the sliding trajectory with the corresponding SNS application if yes, or otherwise displaying the homepage with a web browser application.

(4) Defining a sliding trajectory that can trigger an event, action or command using the first character or letter of a reference word of the event, action or command in Chinese or another language
For example, a trajectory representing the letter "a" that is the initial of the word "ALL" can be defined to trigger the action of "selecting ALL contacts", and similarly, a trajectory of letter "c", the initial of the word "COPY", can be defined for the action of "COPYing a contact".

In addition, as shown in FIG. 11, it can be defined that the input Japanese character "え" triggers a search for all contacts the name of which is initiated with this character.

(5) Fast Contact Synchronization

This may include the actions of copying a contact from a SIM card to a cellular phone or in the other way and synchronizing a contact between an email contact list and cellular phone/SIM card. A sliding manipulation for triggering such actions may be defined simply by defining respective sliding trajectories via the sliding manipulation configuration interface.

(6) Contact Grouping

For example, it may be defined that a trajectory assuming a certain shape drawn on the dial pad or contact list interface conveniently causes a search for or the addition of a contact to a contact group, for example, a circle for family members, a square for work colleagues, and a triangle for friends. In addition, it may be further defined that simultaneously moving multiple fingers forth and back on the touch screen can trigger an actions on a corresponding certain contact grouping, for example, sending information of the contacts in the grouping to paired devices, backing up the information to a cloud, or updating the information of the contacts.

3. Chinese Characters and Strokes. This may allow the user to initiate a fast search of a contact in the contact list by drawing a sliding trajectory resembling a Chinese character or a set of several stokes of a key Chinese character of the name of the contact. The search may be accomplished by comparing the sliding trajectory with those pre-stored in the trajectory database.

For instance, when the user depicts the Chinese character "张" on the dial pad or contact search interface, all contacts containing this character "张" are displayed to the user.

Specific examples may include:

(1) upon a trajectory " 𝓂 " input, immediately searching for and returning a sliding trajectory that matches the input trajectory, wherein if the SIM card of the user is provided by a service provider located in China, the returned sliding trajectory may be a one among those representing a Chinese character or a set of strokes, such as " ⌄⁄⁄ ", having the largest similarity to the input trajectory, and may be a one among those representing a letter, such as "m", having the largest similarity to the input trajectory, if the provider of the SIM card is not located in China.

Preferably, if there are predefined sliding inputs, a popup will be shown to prompt to select an expected search result, or a corresponding subsequent action is triggered. Otherwise, only the matched Chinese character or strokes or the matched letter is returned.

The examples may further include:

(2) upon trajectory representing the character "张" input, search for contacts, of which the name or other information contains the character.

(3) upon a composite trajectory composed of a part representing stroke(s) and another part that is a sliding trajectory, enabling the function of fast sending of a message to multiple contacts, wherein this may further include the steps of:

(a) successively drawing a trajectory representing "小王" and another trajectory " ∪ " in the contact list interface or on the dial pad;

(b) the sliding manipulation identification sub-module performing classification and determination on the input sliding trajectories and transferring a precisely matched result to the output module;

(c) displaying contacts containing "小王" in the contact list interface; and

(d) performing the action associated with the trajectory " ∪ ", i.e., entering an interface for sending a message.

As described above, by taking advantage of a contact list application and a simple sliding input approach in lieu of complex conventional methods such as those for dialing and contact searching, the system and method of the present invention can accomplish dialing, contact searching and other functions in a fast fashion and hence significantly simplify the tedious routine operations needed in the use of common contact list applications and provide users with convenience. In addition, the system and method of the present invention can further provide a variety of advantages including simplicity, efficiency, reliability, robustness and applicability in a wide spectrum of applications, which enable the system and method to serve as a sound foundation for the further scale-up and market development of the portable terminal device industry.

While the present invention has been described in the present specification with reference to specific embodiments, it is apparent that various changes and modifications may be made without departing from the scope of the invention.

**Claims**

1. A system (10) of sliding manipulation-aided input for a portable terminal device, the portable terminal device having a touch screen, the system comprising:

    a. a memory (16), configured to store a database comprising data related to sliding manipulation; and
    b. a processor (12), coupled to the memory (16) and configured to:

        cause to display a dial pad (103) or a contact list interface on the touch screen;
        receive an original message obtained on the dial pad (103) or contact list interface;
        convert the original message to coordinates for processing;
        determine whether the original message represents a sliding manipulation, comprising:

            in a dial pad direct input mode, determining that the original message represents a sliding manipulation when a trajectory directly drawn by a user on the dial pad meets one or more criteria;
            in an independent sliding manipulation identification mode, determining that a trajectory drawn by the user in a drawing area corresponds to a sliding manipulation unless one of a plurality of predetermined events is detected; and
            in a special-start-area sliding manipulation identification mode, identifying all trajectories drawn by a user starting within a designated area as sliding manipulations;

        if said original message is determined as a sliding manipulation, analyze the sliding manipulation and compare it with the data related with sliding manipulation stored in the database to ascertain a class of the sliding manipulation;
        if said original message is determined to be not a sliding manipulation, trigger a routine action corresponding to the original message;
        identify the sliding manipulation according to said ascertained class and based on the database;
        output the result of said identification and trigger a corresponding subsequent action.

2. The system of claim 1, wherein to analyze said sliding manipulation and compare it with the data related with sliding manipulation within the database to ascertain a class of said sliding manipulation, the processor (12) is further configured to: analyze the sliding manipulation to determine whether it is a single slide manipulation or multi-stroke manipulation; and process the coordinates converted from the original message using a classification boundary-based method and compare the sliding manipulation with the data related with sliding manipulation to ascertain the class of the sliding manipulation.

3. The system of claim 1 or 2, wherein in order to enable the identification of the sliding manipulation according to the ascertained class based on the database, the processor (12) is further configured to:

    compare the sliding manipulation with predefined sliding trajectories within the database; and/or
    take one or more of the matched predefined sliding trajectories as the result of the identification, or inquire a user whether to define a new sliding manipulation or prompt the user to re-input a sliding trajectory if none of the sliding trajectories is matched.

4. The system of any one of claims 1 to 3, wherein prior to the outputting of the result of the identification, the processor (12) is further configured to perform one or more of:

    calculating possibility weights of the matched sliding trajectories based on system-predefined impact factors and sorting the sliding trajectories by the possibility weights;
    displaying all the sorted sliding trajectories as the result of the identification for selection;
    if the differences between the largest and the other ones of the possibility weights exceeds a system-predefined threshold, directly selecting the one of the sorted sliding trajectories corresponding to the largest one of the possibility weights as the result of the identification, or otherwise, displaying all the sorted sliding trajectories as the result of the identification for selecting.

5. The system of any one of claims 1 to 4, wherein to perform the outputting of the result of the identification and triggering the corresponding subsequent action, the processor (12) is further configured to perform one or more of:

in case of the result of the identification being a number, appending the number to a dialing sequence;
in case of the result of the identification being a letter, appending the letter to a search sequence and returning all contact entries containing the letter;
in case of the result of the identification being a stroke, appending the stroke to a search sequence and returning all contact entries containing the stroke;
in case of the result of the identification being a Chinese character or a handwritten character of another language, appending the Chinese character or handwritten character to a search sequence and returning all contact entries containing the Chinese character or handwritten character; and
in case of the result of the identification being a user-defined or predefined sliding manipulation, triggering a subsequent action corresponding to the user-defined or predefined sliding manipulation.

6. The system of any one of claims 1 to 5, wherein, when the result of the identification include multiple classes sliding manipulations, comprising at least a first sliding manipulation corresponding to a letter, or a stroke, or a Chinese character, or a handwritten character, or a combination of the above, and a second a second sliding manipulation associated with a system-predefined or user-defined subsequent action thereby, the processor (12) is further configured to:

identify the first sliding manipulation according to system configurations and the database, append a letter, or a stroke, or a Chinese character, or a handwritten character, or a combination corresponding to the first sliding manipulation to a search sequence, and return all contact entries containing the first sliding manipulation; and
identify the second sliding manipulation and according to the result of the second sliding manipulation identification, trigger a system-predefined or user-defined subsequent action on the returned contacts containing said first sliding manipulation.

7. The system of claim 1, wherein the one or more criteria comprise:

a linear distance between a start point and an end point of the trajectory of the sliding movement associated with the original message exceeds a system-predefined distance threshold;
a length of the trajectory of the sliding movement associated with the original message exceeds a system-predefined length threshold;
a time of duration of the sliding movement keeping touched with the touch screen exceeds a system-predefined time threshold;
the trajectory of the sliding movement intersects the borders of two button areas, or bridges two button areas, or crosses through at least two button areas, of the dial pad; and
the original message is associated with simultaneous touches at two or more contact points.

8. The system of claim 1, wherein to analyze said sliding manipulation and compare it with the data related with sliding manipulation within the database to ascertain a class of said sliding manipulation, the processor (12) is further configured to:

receive a signal generated from the user' sliding manipulation;
convert the received signal to a sequence of points in a vector coordinate space;
remove noise points in the converted sequence;
output a noise free path by a filter; and
convert the noise free path into coordinates.

9. The system of claim 7, wherein the processor (12) is further configured to: transfer the converted coordinates to a SVM classifier;
perform by means of the SVM classifier a recognition analysis, resulting in a set of recognized sliding manipulations;
provide the recognized sliding trajectories to the user for the selection of a correct one therefrom;
feed the user's selection to the SVM classifier for its further training.

10. A method of sliding manipulation-aided input for a portable terminal device, the portable terminal device having a touch screen, the method comprising:

> displaying a dial pad (103) or a contact list interface on the touch screen;
> receiving an original message from the dial pad (103) or contact list interface;
> converting the original message to coordinates for processing;
> determining, according to a type of the original message, whether the original message represents a sliding manipulation, comprising:
>
>> in a dial pad direct input mode, determining that the original message represents a sliding manipulation when a trajectory directly drawn by a user on the dial pad meets one or more criteria;
>> in an independent sliding manipulation identification mode, determining that a trajectory drawn by the user in a drawing area corresponds to a sliding manipulation unless one of a plurality of predetermined events is detected; and
>> in a special-start-area sliding manipulation identification mode, identifying all trajectories drawn by a user starting within a designated area as sliding manipulations;
>
> if the original message is determined as representing a sliding manipulation, analyzing the sliding manipulation and comparing it with data related with sliding manipulation within a database to ascertain a class of the sliding manipulation,
> if the original message is determined as not representing a sliding manipulation, triggering a routine action corresponding to the original message;
> identifying the sliding manipulation according to the ascertained class and the stored data related with sliding manipulation, and
> outputting a result of the identification and triggering a corresponding subsequent action.

11. The method of claim 10, wherein the analysis and comparison for ascertaining the class of the sliding manipulation comprises: analyzing the sliding manipulation to determine whether it is a single slide manipulation or multiple manipulation; and processing the coordinates converted from the original message using a classification boundary-based method and comparing the sliding manipulation with the data related with sliding manipulation to ascertain the class of the sliding manipulation.

12. The method of claim 10 or 11, wherein the identification of the sliding manipulation according to its ascertained class and the stored data related with the sliding manipulation comprises:

> matching the sliding manipulation with predefined sliding trajectories within the database;
> identifying one or more of the matched predefined sliding trajectories as the result of the identification, or if none of the sliding trajectories is matched, indicating a new sliding manipulation to be defined or indicating a sliding trajectory to be re-input.

13. The method of claim 10, wherein the method comprises, prior to outputting of the result of the identification, one or more of the steps of:

> calculating possibility weights of the matched sliding trajectories based on system-predefined impact factors;
> sorting the sliding trajectories by the possibility weights; and
> displaying all the sorted sliding trajectories as the result of the identification for a selection, or if the differences between the largest and the other ones of the possibility weights all exceeds a system-predefined threshold, then directly identifying the one of the sorted sliding trajectories corresponding to the largest one of the possibility weights as the result of the identification, or otherwise displaying all the sorted sliding trajectories as the result of the identification.

14. The method of claim 10 or 13, wherein outputting the result of the identification and triggering the corresponding subsequent action, comprises one or more of:

> in case of the result of the identification being a number, appending the number to a dialing sequence;
> in case of the result of the identification being a letter, appending the letter to a search sequence and returning all contact entries containing the letter;
> in case of the result of the identification being a stroke, appending the stroke to a search sequence and returning all contact entries containing the stroke;
in case of the result of the identification being a Chinese character or a handwritten character of another language, appending the Chinese character or handwritten character to a search sequence and returning all contact entries containing the Chinese character or handwritten character; and
in case of the result of the identification being a user-defined or predefined sliding manipulation, triggering an action corresponding to the user-defined or predefined sliding manipulation.

15. The method of claim 10 or 13, wherein when the result of the identification include multiple classes sliding manipulations, comprising at least a first sliding manipulation corresponding to a letter, or a stroke, or a Chinese character, or a handwritten character, or a combination of the above, and a second a second sliding manipulation associated with a system-predefined or user-defined subsequent action, said outputting the result of the identification and triggering the corresponding subsequent action comprises:

identifying the first sliding manipulation according to system configurations and stored data related with the sliding manipulation, appending the letter, stroke, Chinese character, handwritten character, or combination corresponding to the first sliding manipulation to a search sequence, and returning all contacts containing the first sliding manipulation; and
identifying the second sliding manipulation and, according to a result of the second sliding manipulation identification, triggering the system-predefined or user-defined subsequent action on the returned contacts containing the first sliding manipulation.

**Patentansprüche**

1. System (10) von gleitende Manipulation unterstützter Eingabe für ein tragbares Endgerät, das einen Touchscreen aufweist, wobei das System umfasst:

a. einen Speicher (16), der konfiguriert ist, eine Datenbank zu speichern, die Daten im Zusammenhang mit gleitender Manipulation enthält; und
b. einen Prozessor (12), der an den Speicher(16) gekoppelt und so konfiguriert ist, zum:

Verursachen zur Anzeige einer Wählscheibe (103) oder einer Kontaktlistenschnittstelle auf dem Touchscreen;
Empfangen einer ursprünglichen Nachricht, die über die Wählscheibe (103) oder die Kontaktlistenschnittstelle erhalten wird;
Konvertieren der ursprünglichen Nachricht für Verarbeitung in Koordinaten;
Bestimmen, ob die ursprüngliche Nachricht eine gleitende Manipulation darstellt, umfassend:

Bestimmen, in einem Direkteingabemodus der Wählscheibe,, dass die ursprüngliche Nachricht eine gleitende Manipulation darstellt, wenn eine direkt von einem Benutzer auf der Wählscheibe gezeichnete Laufspur ein oder mehrere Kriterien erfüllt;
Bestimmen, in einem unabhängigen Identifikationsmodus für gleitende Manipulation,, dass eine in einem Zeichenbereich vom Benutzer gezeichnete Laufspur einer gleitenden Manipulation entspricht, außer wenn eines von mehreren vorbestimmten Ereignissen erkannt wird; und
Identifizieren, in einem Identifikationsmodus eines speziellen Startbereichs für gleitende Manipulation, aller von einem Benutzer gezeichneten Laufspuren, die innerhalb eines bestimmten Bereichs beginnen, als gleitende Manipulationen;

Analysieren der gleitenden Manipulation und Verglichen dieser mit den Daten im Zusammenhang mit gleitender Manipulation, die in der Datenbank gespeichert sind, um eine Klasse von der gleitenden Manipulation zu ermitteln, wenn diese ursprüngliche Nachricht als eine gleitende Manipulation bestimmt wird;
Auslösen einer der ursprünglichen Nachricht entsprechenden Routineaktion, wenn diese ursprüngliche Nachricht nicht als eine gleitende Manipulation bestimmt wird;
Identifizieren der gleitenden Manipulation nach dieser ermittelten Klasse und basierend auf der Datenbank;
Ausgabe des Ergebnisses dieser Identifizierung und Auslösen einer entsprechenden nachfolgenden Aktion.

2. System nach Anspruch 1, wobei zum Analysieren der gleitenden Manipulation und Vergleichen dieser mit den Daten im Zusammenhang mit gleitender Manipulation in der Datenbank, um eine Klasse der gleitenden Manipulation zu ermitteln, der Prozessor(12) weiter konfiguriert wird, um:

die gleitende Manipulation zu analysieren, damit es bestimmt wird, ob es sich um eine einzelgleitende Manipulation oder eine Multitakt-Manipulation handelt; und

die aus der ursprünglichen Nachricht konvertierten Koordinaten durch eine grenzbasierende Klassifizierungsmethode zu verarbeiten und die gleitende Manipulation mit den Daten im Zusammenhang mit gleitender Manipulation zu vergleichen, um die Klasse der gleitenden Manipulation zu ermitteln.

**3.** System nach Anspruch 1 oder 2, wobei, um die Identifizierung der gleitenden Manipulation entsprechend der ermittelten Klasse basierend auf der Datenbank zu ermöglichen, der Prozessor weiter so konfiguriert wird, dass er:

die gleitende Manipulation mit vordefinierten gleitenden Laufspuren innerhalb der Datenbank vergleicht; und/oder

eine oder mehrere der übereinstimmten vordefinierten gleitenden Laufspuren als das Ergebnis der Identifizierung nimmt, oder sich an einen Benutzer erkundigt, ob eine neue gleitende Manipulation definiert werden soll, oder den Benutzer auffordert, eine gleitende Laufspur erneut einzugeben, wenn keine der gleitenden Laufspuren übereinstimmt.

**4.** System nach einem der Ansprüche 1 bis 3, wobei der Prozessor (12) vor dem Ausgeben des Ergebnisses der Identifizierung weiter so konfiguriert ist, dass eine oder mehrere der Folgenden durchgeführt wird oder werden:

Berechnen der Möglichkeitsgewichte der übereinstimmenden gleitenden Laufspuren basierend auf der systemvordefinierten Auswirkungsfaktoren und Sortieren der gleitenden Laufspuren mittels der Möglichkeitsgewichte;

Anzeigen aller sortierten gleitenden Laufspuren als das Ergebnis der Identifizierung für Auswahl;

direktes Auswählen der einen der sortierten gleitenden Laufspuren, die den größten der Möglichkeitsgewichte entsprechen, als das Ergebnis der Identifizierung, wenn die Unterschiede zwischen dem größten und dem anderen der Möglichkeitsgewichte einen systemvordefinierten Schwellenwert überschreiten, oder anderenfalls, Anzeigen aller sortierten gleitenden Laufspuren als das Ergebnis der Identifizierung zur Auswahl.

**5.** System nach einem der Ansprüche 1 bis 4, wobei, um die Ausgabe des Ergebnisses der Identifizierung und das Auslösen der entsprechenden nachfolgenden Aktion durchzuführen, der Prozessor (12) weiter so konfiguriert ist, eine oder mehrere der Folgenden durchzuführen:

Anfügen der Nummer in eine Wählsequenz, im Falle, dass das Ergebnis der Identifizierung eine Nummer ist;

Anfügen des Buchstabes in eine Suchsequenz und Zurückgeben aller den Buchstabe enthaltenden Kontakteinträge, im Falle, dass das Ergebnis der Identifizierung ein Buchstabe ist;

Anfügen des Strichs in eine Suchsequenz und Zurückgeben aller den Strich enthaltenden Kontakteinträge, im Falle, dass das Ergebnis der Identifizierung ein Strich ist;

Anfügen des chinesischen Zeichens oder des handschriftlichen Zeichens in eine Suchsequenz und Zurückgeben aller das chinesische Zeichen oder das handschriftliche Zeichen enthaltenden Kontakteinträge, im Falle, dass das Ergebnis der Identifizierung ein chinesisches Zeichen oder ein handschriftliches Zeichen einer anderen Sprache ist; und

Auslösen einer nachfolgenden Aktion, die der benutzerdefinierten oder vordefinierten gleitenden Manipulation entspricht, im Falle, dass das Ergebnis der Identifizierung eine benutzerdefinierte oder vordefinierte gleitende Manipulation ist.

**6.** System nach einem der Ansprüche 1 bis 5, wobei, wenn das Ergebnis der Identifizierung mehrere Klassen der gleitenden Manipulationen umfasst, umfassend mindestens eine erste gleitende Manipulation, die einem Buchstabe, oder einem Strich oder einem chinesischen Zeichen oder einem handschriftlichen Zeichen, oder eine Kombination der oben genannten entspricht, und eine zweite gleitende Manipulation im Zusammenhang mit einer systemvordefinierten oder benutzerdefinierten nachfolgenden Aktion, der Prozessor (12) weiter konfiguriert wird, um:

die erste gleitende Manipulation nach Systemkonfigurationen und der Datenbank zu identifizieren, einen Buchstabe, oder einen Strich, oder ein chinesisches Zeichen oder ein handschriftliches Zeichen, oder eine Kombination entsprechend der ersten gleitenden Manipulation in eine Suchsequenz anzufügen, und alle Kontakteinträge zurückzugeben, die die erste gleitende Manipulation enthalten; und

die zweite gleitende Manipulation zu identifizieren und entsprechend dem Ergebnis der Identifizierung der zweiten gleitenden Manipulation eine system-vordefinierte oder benutzerdefinierte nachfolgende Aktion auf die zurückgegebenen Kontakte auszulösen, die die erste gleitende Manipulation enthalten.

7. System nach Anspruch 1, wobei die eine oder mehrere Kriterien umfasst oder umfassen, dass:

einen linearen Abstand zwischen einem Startpunkt und einem Endpunkt der Laufspur der Gleitbewegung, die sich auf die ursprüngliche Nachricht bezieht, einen systemvordefinierten Abstandsschwellenwert überschreitet;
eine Länge der Laufspur der Gleitbewegung, die sich auf die ursprüngliche Nachricht bezieht, einen systemvordefinierten Längenschwellenwert überschreitet;
eine Zeitdauer der Gleitbewegung, die mit dem Touchscreen in Berührung bleibt, einen systemvordefinierten Zeitschwellenwert überschreitet;
die Laufspur der Gleitbewegung die Ränder von zwei Tastenbereichen der Wählscheibe schneidet, oder zwei Tastenbereiche der Wählscheibe überbrückt, oder mindestens zwei Tastenbereiche der Wählscheibe kreuzt; und
die ursprüngliche Nachricht sich auf die gleichzeitigen Berührungen an zwei oder mehrere Kontaktpunkte bezieht.

8. System nach Anspruch 1, wobei zur Analyse der gleitenden Manipulation und zum Vergleichen dieser mit den Daten im Zusammenhang mit gleitender Manipulation innerhalb der Datenbank, um eine Klasse der gleitenden Manipulation zu ermitteln, der Prozessor (12) weiter konfiguriert ist, um:

ein Signal zu empfangen, das aus der gleitenden Manipulation des Benutzers generiert wird;
das empfangene Signal in eine Sequenz von Punkten in einem Vektorkoordinatenraum zu konvertieren;
Rauschpunkte in der konvertierten Sequenz zu entfernen;
einen geräuschfreien Pfad durch einen Filter auszugeben; und
den geräuschfreien Pfad in Koordinaten zu konvertieren.

9. System nach Anspruch 7, wobei der Prozessor (12) weiter konfiguriert wird, um:

die konvertierten Koordinaten in einen SVM-Klassifikator zu übertragen;
mit Hilfe des SVM-Klassifikators eine Erkennungsanalyse durchzuführen, die zu einer Reihe erkannter gleitenden Manipulationen führt;
dem Benutzer die erkannten gleitenden Laufspuren zur Auswahl einer richtigen davon bereitzustellen;
die Auswahl des Benutzers zur Weiterbildung an den SVM-Klassifikator zu speisen.

10. Verfahren zur gleitende Manipulation unterstützten Eingabe für ein tragbares Endgerät, das einen Touchscreen aufweist, wobei das Verfahren umfasst:

Anzeigen einer Wählscheibe (103) oder einer Kontaktlistenschnittstelle auf dem Touchscreen;
Empfangen einer ursprünglichen Nachricht von der Wählscheibe (103) oder der Kontaktlistenschnittstelle;
Konvertieren der ursprünglichen Nachricht in Koordinaten zur Verarbeitung;
Bestimmen entsprechend einem Typ der ursprünglichen Nachricht, ob die ursprüngliche Nachricht eine gleitende Manipulation darstellt, umfassend:

Bestimmen, in einem Direkteingabemodus für Wählscheibe, dass die ursprüngliche Nachricht eine gleitende Manipulation darstellt, wenn eine direkt von einem Benutzer auf der Wählscheibe gezeichnete Laufspur eine oder mehrere Kriterien erfüllt;
Bestimmen, in einem unabhängigen Identifizierungsmodus für gleitende Manipulation, dass eine in einem Zeichenbereich vom Benutzer gezeichnete Laufspur einer gleitenden Manipulation entspricht, außer wenn eines von mehreren vorbestimmten Ereignissen erkannt wird; und
Identifizieren, in einem Identifizierungsmodus im speziellen Startbereich für gleitende Manipulation, aller von einem Benutzer gezeichneten Laufspuren, die innerhalb eines bestimmten Bereichs beginnen, als gleitende Manipulationen;

Analysieren der gleitenden Manipulation und Vergleichen dieser mit Daten im Zusammenhang mit gleitender Manipulation innerhalb einer Datenbank, um eine Klasse der gleitenden Manipulation zu ermitteln, wenn bestimmt wird, die ursprüngliche Nachricht einer gleitenden Manipulation darstellt,
Auslösen einer der ursprünglichen Nachricht entsprechenden Routineaktion, wenn die ursprüngliche Nachricht bestimmt wird eine gleitende Manipulation nicht darzustellen;

Identifizieren der gleitenden Manipulation nach der ermittelten Klasse und den gespeicherten Daten im Zusammenhang mit gleitender Manipulation, und

Ausgeben eines Ergebnisses der Identifizierung und Auslösen einer entsprechenden nachfolgenden Aktion.

11. Verfahren nach Anspruch 10, wobei die Analyse und die Vergleichung zur Ermittlung der Klasse der gleitenden Manipulation umfasst: Analysieren der gleitenden Manipulation, um festzustellen, ob es sich um eine einzelne gleitende Manipulation oder Multi-Manipulation handelt; und Verarbeiten der aus der ursprünglichen Nachricht konvertierten Koordinaten unter Verwendung eines auf Klassifizierungsgrenzen basierenden Verfahrens und Vergleichen der gleitenden Manipulation mit den Daten im Zusammenhang mit gleitender Manipulation, um die Klasse der gleitenden Manipulation zu ermitteln.

12. Verfahren nach Anspruch 10 oder 11, wobei die Identifizierung der gleitenden Manipulation nach ihrer ermittelten Klasse und der gespeicherten Daten im Zusammenhang mit der gleitenden Manipulation umfasst:

Übereinstimmen der gleitenden Manipulation mit den vordefinierten gleitenden Laufspuren innerhalb der Datenbank;

Identifizieren einer oder mehrerer der übereinstimmenden vordefinierten gleitenden Laufspuren als das Ergebnis der Identifizierung, oder Hinweisen einer zu definierenden neuen gleitenden Manipulation oder Hinweisen einer erneut einzugebenden gleitenden Laufspur, wenn keine der gleitenden Laufspuren übereinstimmt.

13. Verfahren nach Anspruch 10, wobei das Verfahren vor der Ausgabe des Ergebnisses der Identifizierung einen oder mehrere der folgenden Schritte umfasst:

Berechnen der Möglichkeitsgewichte der übereinstimmten gleitenden Laufspuren auf der Grundlage systemvordefinierter Auswirkungsfaktoren;

Sortieren der gleitenden Laufspuren nach den Möglichkeitsgewichten; und

Anzeigen aller sortierten gleitenden Laufspuren als Ergebnis der Identifizierung für eine Auswahl, oder direktes Identifizieren der einer der sortierten gleitenden Lautspuren, die der größten der Möglichkeitsgewichte entsprechen, als das Ergebnis der Identifizierung, wenn die Unterschiede zwischen der größten und der anderen der Möglichkeitsgewichte alle einen systemvordefinierten Schwellenwert überschreiten, oder anderenfalls, Anzeigen aller sortierten gleitenden Laufspuren als das Ergebnis der Identifizierung.

14. Verfahren nach Anspruch 10 oder 13, wobei Ausgabe des Ergebnisses der Identifizierung und Auslösen der entsprechenden nachfolgenden Aktion, umfasst eines oder mehrere von:

Anfügen der Nummer in eine Wählsequenz, im Falle, dass das Ergebnis der Identifizierung eine Nummer ist;

Anfügen eines Buchstabes in eine Suchsequenz und Zurückgeben aller den Buchstabe enthaltenden Kontakteinträge, im Falle, dass das Ergebnis der Identifizierung ein Buchstabe ist;

Anfügen eines Strichs in eine Suchsequenz und Zurückgeben aller den Strich enthaltenden Kontakteinträge, im Falle, dass das Ergebnis der Identifizierung ein Strich ist;

Anfügen des chinesischen Zeichens oder des handschriftlichen Zeichens in eine Suchsequenz und Zurückgeben aller das chinesische Zeichen oder das handschriftliche Zeichen enthaltenden Kontakteinträge, im Falle, dass das Ergebnis der Identifizierung ein chinesisches Zeichen oder ein handschriftliches Zeichen einer anderen Sprache ist; und

Auslösen einer Aktion, die der benutzerdefinierten oder vordefinierten gleitenden Manipulation entspricht, im Falle, dass das Ergebnis der Identifizierung eine benutzerdefinierte oder vordefinierte gleitende Manipulation ist.

15. Verfahren nach Anspruch 10 oder 13, wobei, wenn das Ergebnis der Identifizierung mehrere Klassen von gleitenden Manipulationen aufweist, umfassend mindestens eine erste gleitende Manipulation, die einem Buchstabe, einem Strich oder einem chinesischen Zeichen oder einem handschriftlichen Zeichen oder einer Kombination der oben genannten entspricht, und eine zweite gleitende Manipulation im Zusammenhang mit einer systemvordefinierten oder benutzerdefinierten nachfolgenden Aktion, die Ausgabe des Ergebnisses der Identifizierung und das Auslösen der entsprechenden nachfolgenden Aktion umfasst:

Identifizieren der ersten gleitenden Manipulation nach Systemkonfigurationen und gespeicherten Daten im Zusammenhang mit der gleitenden Manipulation, Anfügen des Buchstabes, des Strichs, des chinesischen Zeichens, des handschriftlichen Zeichens oder der Kombination entsprechend der ersten gleitenden Manipulation zu einer Suchsequenz, und Zurückgeben aller die erste gleitende Manipulation enthaltenden Kontakte; und

Identifizieren der zweiten gleitenden Manipulation und entsprechend dem Ergebnis der Identifizierung der zweiten gleitenden Manipulation, Auslösen der systemvordefinierten oder benutzerdefinierten nachfolgenden Aktion auf die zurückgegebenen Kontakte, die die erste gleitende Manipulation enthalten.

**Revendications**

1. Système (10) d'entrée assistée par une manipulation de glissement pour un dispositif terminal portable, le dispositif terminal portable ayant un écran tactile, le système comprenant:

   a. une mémoire (16), configurée pour stocker une base de données comprenant des données liées à une manipulation de glissement; et
   b. un processeur (12), couplé à la mémoire (16) et configuré pour:

      faire afficher un pavé numérique (103) ou une interface de liste de contacts sur l'écran tactile;
      recevoir un message original obtenu sur le pavé numérique (103) ou l'interface de la liste de contacts;
      convertir le message original en coordonnées pour un traitement;
      déterminer si le message original représente une manipulation de glissement, comprenant:

         dans un mode d'entrée directe de pavé numérique, déterminer que le message original représente une manipulation de glissement lorsqu'une trajectoire directement tracée par un utilisateur sur le pavé numérique répond à un ou plusieurs critères;
         dans un mode d'identification de manipulation de glissement indépendant, déterminer qu'une trajectoire tracée par l'utilisateur dans une zone de dessin correspond à une manipulation de glissement à moins qu'un d'une pluralité d'événements prédéterminés soit détecté; et
         dans un mode d'identification de manipulation de glissement de zone de départ spéciale, identifier toutes trajectoires tracées par un utilisateur départant dans une zone désignée comme des manipulations de glissement;

      si ledit message original est déterminé comme étant une manipulation de glissement, analysez la manipulation de glissement et la comparer avec les données liées à une manipulation de glissement stockées dans la base de données pour établir une classe de la manipulation de glissement;
      si ledit message original est déterminé comme n'étant pas une manipulation de glissement, déclencher un action de routine correspondant au message original;
      identifier la manipulation de glissement selon ladite classe établie et sur la base de la base de données;
      sortir le résultat de ladite identification et déclencher un action subséquente correspondante.

2. Système selon la revendication 1, dans lequel pour analyser ladite manipulation de glissement et la comparer avec les données liées à une manipulation de glissement dans la base de données pour établir une classe de ladite manipulation de glissement, le processeur (12) est en outre configuré pour: analyser la manipulation de glissement pour déterminer s'il s'agit d'une manipulation à un seul glissement ou une manipulation à plusieurs traits; et traiter les coordonnées converties à partir du message original en utilisant une méthode basée sur des limites de classification et comparer la manipulation de glissement avec les données lié à une manipulation de glissement pour établir la classe de la manipulation de glissement.

3. Système selon la revendication 1 ou 2, dans lequel afin de permettre l'identification de la manipulation de glissement selon la classe établie sur la base de la base de données, le processeur (12) est en outre configuré pour:

   comparer la manipulation de glissement avec des trajectoires de glissement prédéfinies dans la base de données;
   et/ou
   prendre une ou plusieurs des trajectoires de glissement prédéfinies correspondantes comme le résultat de l'identification, ou demander à un utilisateur s'il faut définir une nouvelle manipulation de glissement ou inciter l'utilisateur de re-entrer une trajectoire de glissement si aucune des trajectoires de glissement ne correspond.

4. Système selon l'une quelconque des revendications 1 à 3, dans lequel avant la sortie du résultat de l'identification, le processeur (12) est en outre configuré pour effectuer un ou plusieurs de ce qui suit:

calculer des poids de possibilité des trajectoires de glissement correspondentes sur la base de facteurs d'impact prédéfinis par le système et trier les trajectoires de glissement par les poids de possibilité;

afficher toutes les trajectoires de glissement triées comme le résultat de l'identification pour une sélection;

si les différences entre le plus grand et les autres des poids de possibilités dépassent un seuil prédéfini par le système, sélectionner directement celle des trajectoires de glissement triées correspondant au plus grand des poids de possibilité comme le résultat de l'identification, ou autrement, afficher toutes les trajectoires de glissement triées comme le résultat de l'identification pour une sélection.

5. Système selon l'une quelconque des revendications 1 à 4, dans lequel pour effectuer la sortie du résultat de l'identification et le déclenchement de l'action subséquente correspondante, le processeur (12) est en outre configuré pour effectuer un ou plusieurs de ce qui suit:

dans le cas où le résultat de l'identification est un numéro, joindre le numéro à une séquence de numérotation;

dans le cas où le résultat de l'identification est une lettre, joindre la lettre à une séquence de recherche et renvoyer toutes les entrées de contact contenant la lettre;

dans le cas où le résultat de l'identification est un trait, joindre le trait à une séquence de recherche et renvoyer toutes les entrées de contact contenant le trait;

dans le cas où le résultat de l'identification est un caractère chinois ou caractère manuscrit d'une autre langue, joindre le caractère chinois ou le caractère manuscrit à une séquence de recherche et renvoyer toutes les entrées de contact contenant le caractère chinois ou le caractère manuscrit; et

dans le cas où le résultat de l'identification est une manipulation de glissement définie par l'utilisateur ou prédéfinie, déclencher une action subséquente correspondant à la manipulation de glissement définie par l'utilisateur ou prédéfinie.

6. Système selon l'une quelconque des revendications 1 à 5, dans lequel, lorsque le résultat de l'identification comprend des manipulations de glissement de plusieurs classes, comprenant au moins une première manipulation de glissement correspondant à une lettre, ou un trait, ou un caractère chinois, ou un caractère manuscrit, ou une combinaison de ce qui précède, et une deuxième manipulation de glissement associée à une action subséquent ainsi prédéfinie par le système ou définie par l'utilisateur, le processeur (12) est en outre configuré pour:

identifier la première manipulation de glissement selon des configurations système et de la base de données, joindre une lettre, ou un trait, ou un caractère chinois, ou un caractère manuscrit, ou un combinaison correspondant à la première manipulation de glissement à une séquence de recherche, et renvoyer toutes les entrées de contact contenant la première manipulation de glissement; et

identifier la deuxième manipulation de glissement et selon le résultat de l'identification de la deuxième manipulation de glissement, déclencher une action subséquente prédéfinie par le système ou définie par l'utilisateur sur les contacts renvoyés contenant ladite première manipulation de glissement.

7. Système selon la revendication 1, dans lequel l'un ou les plusieurs critères comprennent:

une distance linéaire entre un point de départ et un point d'arrivée de la trajectoire du mouvement de glissement associé au message original dépasse un seuil de distance prédéfini par le système;

une longueur de la trajectoire du mouvement de glissement associée au message original dépasse un seuil de longueur prédéfini par le système;

un temps de durée du mouvement de glissement en restant touché avec l'écran tactile dépasse un seuil de temps prédéfini par le système;

la trajectoire du mouvement de glissement s'intersecte avec les bordures de deux zones de bouton, ou relie deux zones de bouton, ou traverse au moins deux zones de bouton, du pavé numérique; et

le message original est associé à des contacts simultanés à deux ou plus de points de contact.

8. Système selon la revendication 1, dans lequel pour analyser ladite manipulation de glissement et la comparer avec les données liées à une manipulation de glissement dans la base de données pour établir une classe de ladite manipulation de glissement, le processeur (12) est en outre configuré pour:

recevoir un signal généré à partir de la manipulation de glissement de l'utilisateur;

convertir le signal reçu en une séquence de points dans un espace de coordonnées vectorielles;

supprimer des points de bruit dans la séquence convertie; sortir un chemin sans bruit par un filtre; et

convertir le chemin sans bruit en coordonnées.

**9.** Système selon la revendication 7, dans lequel le processeur (12) est en outre configuré pour: transférer les coordonnées converties à un classificateur SVM;

effectuer au moyen du classificateur SVM une analyse de reconnaissance, résultant en un ensemble de manipulations de glissement reconnues;

fournir les trajectoires de glissement reconnues à l'utilisateur pour une sélection d'une trajectoire correcte parmi eux;

alimenter la sélection de l'utilisateur au classificateur SVM pour sa formation ultérieure.

**10.** Procédé d'entrée assistée par une manipulation de glissement pour un dispositif terminal portable, le dispositif terminal portable ayant un écran tactile, le procédé comprenant:

afficher un pavé numérique (103) ou une interface de liste de contacts sur l'écran tactile;

recevoir un message original du pavé numérique (103) ou de l'interface de liste de contacts;

convertir le message original en coordonnées pour un traitement;

déterminer, selon un type du message original, si le message original représente une manipulation de glissement, comprenant:

dans un mode d'entrée directe de pavé numérique, déterminer que le message original représente une manipulation de glissement lorsqu'une trajectoire directement tracée par un utilisateur sur le pavé numérique répond à un ou plusieurs critères;

dans un mode d'identification de manipulation de glissement indépendant, déterminer qu'une trajectoire tracée par l'utilisateur dans une zone de dessin correspond à une manipulation de glissement à moins qu'un d'une pluralité d'événements prédéterminés soit détecté; et

dans un mode d'identification de manipulation de glissement de zone de départ spéciale, identifier toutes trajectoires tracées par un utilisateur départant dans une zone désignée comme des manipulations de glissement;

si le message original est déterminé comme représentant une manipulation de glissement, analysez la manipulation de glissement et la comparer avec des données liées à une manipulation de glissement dans une base de données pour établir une classe de la manipulation de glissement;

si le message original est déterminé comme ne représentant pas une manipulation de glissement, déclencher un action de routine correspondant au message original;

identifier la manipulation de glissement selon la classe établie et les données liées à une manipulation de glissement stockées; et

sortir un résultat de l'identification et déclencher une action subséquente correspondante.

**11.** Procédé selon la revendication 10, dans lequel l'analyse et la comparaison pour établir la classe de la manipulation de glissement comprend: analyser la manipulation de glissement pour déterminer s'il s'agit d'une manipulation à un seul glissement ou des plusieurs manipulations; et traiter les coordonnées converties à partir du message original en utilisant une méthode basée sur des limites de classification et comparer la manipulation de glissement avec les données lié à une manipulation de glissement pour établir la classe de la manipulation de glissement.

**12.** Procédé selon la revendication 10 ou 11, dans lequel l'identification de la manipulation de glissement selon sa classe établie et les données liées à la manipulation de glissement stockées comprend:

faire correspondre la manipulation de glissement avec des trajectoires de glissement prédéfinies dans la base de données;

identifier une ou plusieurs des trajectoires de glissement prédéfinies correspondantes comme le résultat de l'identification, ou si aucune des trajectoires de glissement ne correspond, indiquer qu'il faut définir une nouvelle manipulation de glissement ou indiquer qu'il faut re-entrer une trajectoire de glissement.

**13.** Procédé selon la revendication 10, dans lequel le procédé comprend, avant la sortie du résultat de l'identification, une ou plusieurs des étapes de:

calculer des poids de possibilité des trajectoires de glissement correspondantes sur la base de facteurs d'impact prédéfinis par le système;

trier les trajectoires de glissement par les poids de possibilité; et

afficher toutes les trajectoires de glissement triées comme le résultat de l'identification pour une sélection, ou si les différences entre le plus grand et les autres des poids de possibilités dépassent un seuil prédéfini par le système, alors sélectionner directement celle des trajectoires de glissement triées correspondant au plus grand des poids de possibilité comme le résultat de l'identification, ou autrement, afficher toutes les trajectoires de glissement triées comme le résultat de l'identification.

14. Procédé selon la revendication 10 ou 13, dans lequel sortir le résultat de l'identification et déclencher l'action subséquente correspondante, comprend un ou plusieurs de ce qui suit:

dans le cas où le résultat de l'identification est un numéro, joindre le numéro à une séquence de numérotation;
dans le cas où le résultat de l'identification est une lettre, joindre la lettre à une séquence de recherche et renvoyer toutes les entrées de contact contenant la lettre;
dans le cas où le résultat de l'identification est un trait, joindre le trait à une séquence de recherche et renvoyer toutes les entrées de contact contenant le trait;
dans le cas où le résultat de l'identification est un caractère chinois ou caractère manuscrit d'une autre langue, joindre le caractère chinois ou le caractère manuscrit à une séquence de recherche et renvoyer toutes les entrées de contact contenant le caractère chinois ou le caractère manuscrit; et
dans le cas où le résultat de l'identification est une manipulation de glissement définie par l'utilisateur ou prédéfinie, déclencher une action correspondant à la manipulation de glissement définie par l'utilisateur ou prédéfinie.

15. Procédé selon la revendication 10 ou 13, dans lequel lorsque le résultat de l'identification comprend des manipulations glissantes de plusieurs classes, comprenant au moins une première manipulation de glissement correspondant à une lettre, ou un trait, ou un caractère chinois, ou un caractère manuscrit, ou une combinaison de ce qui précède, et une deuxième manipulation de glissement associée à une action subséquente prédéfinie par le système ou définie par l'utilisateur, ladite sortir du résultat de l'identification et le déclenchement de l'action subséquente correspondante comprend:

identifier la première manipulation de glissement selon des configurations système et des données liées à la manipulation de glissement stockées, joindre la lettre, trait, caractère chinois, caractère manuscrit, ou combinaison correspondant à la première manipulation de glissement à une séquence de recherche, et renvoyer toutes les entrées de contact contenant la première manipulation de glissement; et
identifier la deuxième manipulation de glissement et, selon un résultat de l'identification de la deuxième manipulation de glissement, déclencher l'action subséquente prédéfinie par le système ou définie par l'utilisateur sur les contacts renvoyés contenant ladite première manipulation de glissement.

SERVER

NETWORK STORAGE
MODULE

RETRIEVAL | UPLOADING

PORTABLE TERMINAL DEVICE

COMMUNICATION DISPLAY
CONTROL MODULE

INPUT
SUB-MODULE

SLIDING MANIPULATION
USER-DEFINED MODULE

SLIDING INPUT
PROCESSING MODULE

SLIDING MANIPULATION
DETERMINATION
SUB-MODULE

SLIDING MANIPULATION
IDENTIFICATION
SUB-MODULE

SLIDING INPUT
DATABASE MODULE

PREDEFINED
SLIDING INPUTS

USER-DEFINED
SLIDING INPUTS

CHINESE
CHARACTERS AND
STROKES

**FIG. 1**

OBTAIN DATA OF AN SLIDING INPUT

IS THE INPUT COMPLETED?

YES

NO

WAIT FOR ANOTHER INPUT

DETERMINE A CLASS OF THE SLIDING MANIPULATION

MATCH THE SLIDING MANIPULATION WITH SLIDING TRAJECTORIES STORED IN A DATABASE

IS THERE ANY MATCHED SLIDING TRAJECTORY?

NO

YES

PROMPT THE USER TO DEFINE A NEW SLIDING MANIPULATION AND START A SLIDING INPUT DEFINITION PROCESS, OR REDRAW A SLIDING TRAJECTORY

ARE THERE MULTIPLE SIMILAR MATCHED TRAJECTORIES?

NO

YES

CALCULATE IDENTIFICATION POSSIBILITIES BASED ON VARIOUS IMPACT FACTORS (E.G., CALL FREQUENCIES OF CONTACTS) AND SORTING THE POSSIBILITIES

IS THERE A LARGE GAP BETWEEN THE LARGEST AND ANY OTHER POSSBILITY?

YES

OUTPUT A RESULT OF THE IDENTIFICATION AND TRIGGER A CORRESPONDING ACTION

NO

PROMPT THE USER TO SELECT ONE OF THE MATCHED TRAJECTORIES

**FIG. 2**

**FIG. 3**

**FIG. 4**

EP 2 874 383 B1

101

102

103 — SLIDING INPUT AREA

104 — 105

**FIG. 5**

Contact List

Liu
18600000000

Zheng
13500000000

Zhou
13800000000

**FIG. 6**

34

```
┌─────────────────────────┐
│      SLIDING INPUT       │
└─────────────────────────┘
              │
              ▼
┌─────────────────────────────────┐
│ CONVERT TO A SEQUENCE OF POINT IN│
│    A VECTOR COORDINATE SPACE     │
└─────────────────────────────────┘
              │
              ▼
        ┌──────────┐
        │  FILTER  │
        └──────────┘
              │  REMOVE NOISE POINTS
              ▼
        ┌──────────────┐ ◄─────────┐
        │  CLASSIFIER  │           │
        └──────────────┘           │      FEED BACK TO
              │                    │    CLASSIFIER FOR
              ▼                    │      TRAINING OF
        ┌──────────────┐          │    CLASSIFIER WITH
        │ OBTAIN SIMILAR│         │   USER'S PREFERENCES
        │   RESULTS     │         │
        └──────────────┘         │
              │                   │
              ▼                   │
   ┌─────────────────────────┐    │
   │ SELECT CORRECT SLIDING  │────┘
   │     MANIPULATION        │
   └─────────────────────────┘
```

**FIG. 7**

**FIG. 8**

SELECT SLIDING
MANIPULATION DEFINITION

↓

DETERMINE ACTION OR FUNCTION
ASSOCIATED WITH SLIDING INPUT

↓

TAP "CONFIRM" BUTTON AND ENTER
NEW SLIDING MANIPULATION
DEFINITION INTERFACE

↓

COMPLETE NEW SLIDING
MANIPULATION DEFINITION

↓

TAP "CONFIRM"
BUTTON TO STORE

↓

MAKE SLIDING INPUT IN A
SPECIFIED INTERFACE

↓

TRIGGER CORRESPONDING
FUNCTION

**FIG. 9**

New Sliding Manipulation

Dial             >

Send a text message    >

Enter a detailed information page   >

Visit SNS homepage of a freind   >

**FIG. 10A**

Edit    Save

**Karl :13000000000**

Make a sliding manipulation in the
keyboard area below

Selectable sliding
trajectories

**FIG. 10B**

Recent calls

| 1 | 2 ABC | 3 DEF |
| 4 GHI | 5 JKL | 6 MNO |
| 7 PQRS | 8 TUV | 9 WXYZ |
| * | 0 + | # |

**FIG. 10C**

**FIG. 11**

**FIG. 12**

38

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Gesture Search: A tool for Fast Mobile Data Access. **YANG LI.** Google Research. ACM, 03 October 2010